(19)

Europäisches
Patentamt
European
Patent Office
Office européen
des brevets

(11) **EP 4 412 296 A1**

(12) **EUROPEAN PATENT APPLICATION**

published in accordance with Art. 153(4) EPC

(43) Date of publication:
**07.08.2024 Bulletin 2024/32**

(21) Application number: **22886006.0**

(22) Date of filing: **26.10.2022**

(51) International Patent Classification (IPC):
***H04W 24/10*** (2009.01)

(52) Cooperative Patent Classification (CPC):
**H04W 24/10; Y02D 30/70**

(86) International application number:
**PCT/CN2022/127611**

(87) International publication number:
**WO 2023/072130 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.10.2021 CN 202111277365**

(71) Applicant: **Huawei Technologies Co., Ltd.
Shenzhen, Guangdong 518129 (CN)**

(72) Inventors:
• **LIU, Chenchen
  Shenzhen, Guangdong 518129 (CN)**
• **YANG, Xun
  Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **SENSING MEASUREMENT METHOD AND RELATED APPARATUS**

(57) Embodiments of this application disclose a sensing measurement method and a related apparatus. The sensing measurement method is applicable to a wireless personal area network WPAN based on an ultra-bandwidth UWB technology. For example, the sensing measurement method is applicable to a wireless personal area network that supports the IEEE 802.15 series standards such as the IEEE 802.15.4a standard, the IEEE 802.15.4z standard, the IEEE 802.15.4ab standard, or a future-generation UWB WPAN standard. A first device sends a first physical layer protocol data unit PPDU to a second device, where the first PPDU is used for sensing measurement; and the first device receives a second PPDU from the second device, where the second PPDU includes a sensing measurement result, and the sensing measurement result is obtained by the second device by performing sensing measurement on the first PPDU. This implements sensing of a target in a surrounding environment, and feeds back the corresponding sensing measurement result to the first device.

FIG. 6

EP 4 412 296 A1

**Description**

This application claims priority to Chinese Patent Application No. 202111277365.5, filed with the China National Intellectual Property Administration on October 29, 2021 and entitled "SENSING MEASUREMENT METHOD AND RELATED APPARATUS", which is incorporated herein by reference in its entirety.

**TECHNICAL FIELD**

This application relates to the field of communication technologies, and in particular, to a sensing measurement method and a related apparatus.

**BACKGROUND**

An ultra-wideband (Ultra-WideBand, UWB) technology is a wireless carrier communication technology, performs data transmission via a nanosecond-level non-sine wave narrow pulse, and therefore occupies a very wide spectrum range. The non-sine wave narrow pulse is very narrow, and has an extremely low radiation spectral density. Therefore, a UWB wireless communication system has advantages such as a strong multipath resolution capability, low power consumption, and strong confidentiality.

In 2002, the Federal Communications Commission (Federal Communications Commission, FCC) approved entry of the UWB technology into the civil field, and the UWB technology becomes one of much-talked-about physical layer technologies in a short-distance and high-speed wireless network. The IEEE incorporates the UWB technology into the IEEE 802 series wireless standards. Currently, the IEEE has published the UWB technology-based high-speed wireless personal area network (Wireless Personal Area Network, WPAN) standard IEEE 802.15.4a and an evolved version IEEE 802.15.4z of the standard IEEE 802.15.4a. Formulation of the next generation UWB wireless personal area network standard 802.15.4ab is put on the agenda.

In the UWB wireless communication system, a signal for wireless communication has a very large bandwidth (a minimum of 500 MHz (megahertz)), and therefore, a high-precision ranging result or a sensing measurement result can be obtained through an ultra-wideband signal. However, in the UWB wireless communication system, how to implement sensing of a surrounding environment and feed back a sensing measurement result through the ultra-wideband signal is a problem worth considering.

**SUMMARY**

This application provides a sensing measurement method and a related apparatus, so that a second device can sense a target in a surrounding environment and feed back a corresponding sensing measurement result to a first device.

A first aspect of this application provides a sensing measurement method. The method includes:

A first device sends a first physical layer protocol data unit (PHY Protocol Data Unit, PPDU) to a second device, where the first PPDU is used for sensing measurement; and the first device receives a second PPDU from the second device, where the second PPDU includes a sensing measurement result, and the sensing measurement result is obtained by the second device by performing sensing measurement on the first PPDU.

The foregoing technical solution is applicable to a UWB wireless communication system, and the first device and the second device may be two UWB devices in the UWB wireless communication system. The first device sends the first PPDU to the second device, and then the first device may receive the second PPDU from the second device, where the second PPDU includes the sensing measurement result, and the sensing measurement result is obtained by the second device by performing the sensing measurement on the first PPDU. In this way, the UWB device can sense a surrounding environment and feed back the corresponding sensing measurement result.

A second aspect of this application provides a sensing measurement method. The method includes:

A second device receives a first PPDU from a first device; the second device performs sensing measurement on the first PPDU, to obtain a sensing measurement result; and the second device sends a second PPDU to the first device, where the second PPDU includes the sensing measurement result.

The foregoing technical solution is applicable to a UWB wireless communication system, and the first device and the second device may be two UWB devices in the UWB wireless communication system. The second device performs the sensing measurement on the first PPDU, to obtain the sensing measurement result, and feeds back the sensing measurement result to the first device. In this way, the UWB device can sense a surrounding environment and feed back the corresponding sensing measurement result.

Based on either of the first aspect and the second aspect, in a first implementation of this application, the sensing measurement result includes at least one of the following: transmission path quantity information, multipath signal component amplitude information, time information, angle information, and location information of the second device.

The transmission path quantity information indicates a quantity of transmission paths between the first device and the second device, the multipath signal component amplitude information includes signal amplitude information corresponding to the first PPDU on at least one transmission path between the first device and the second device, the time information includes time information corresponding to the first PPDU on the at least one transmission path, and the angle information includes information about an angle at which the first PPDU arrives at the second device on the at least one transmission path.

The foregoing implementation shows specific content of the sensing measurement result, which specifically includes the signal amplitude information, the time information, and the angle information of the first PPDU transmitted on the at least one transmission path between the first device and the second device, the quantity of transmission paths between the first device and the second device, the location information of the second device, and the like. This helps the first device determine information such as a location and a speed of the target in the surrounding environment based on the sensing measurement result, and implement sensing of the target in the surrounding environment.

Based on any one of the first aspect, the second aspect, and the first implementation of this application, in a second implementation of this application, the multipath signal component amplitude information includes in-phase signal amplitude information and quadrature signal amplitude information, the in-phase amplitude information includes amplitude information of an in-phase signal corresponding to the first PPDU on the at least one transmission path, and the quadrature amplitude information includes amplitude information of a quadrature signal corresponding to the first PPDU on the at least one transmission path.

In this implementation, the multipath signal component amplitude information indicates signal energy of the first PPDU on each transmission path from two dimensions (the in-phase signal of the first PPDU and the quadrature signal of the first PPDU). This helps the first device determine, based on the multipath signal component amplitude information, a signal amplitude change and a signal phase change on each transmission path. Because the phase change of the signal may indicate a moving speed of a target in an environment to some extent, the first device may determine information such as the moving speed of the target based on the multipath signal component amplitude information.

Based on any one of the first aspect, the second aspect, and the first implementation and the second implementation of this application, in a third implementation of this application, the in-phase signal amplitude information includes at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has strongest signal energy; and the quadrature signal amplitude information includes at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

In the foregoing implementation, the in-phase signal amplitude information may be indicated by using the at least one first amplitude difference, and the quadrature signal amplitude information may be indicated by using the at least one second amplitude difference. When the signal amplitude information can be correctly indicated, a quantity of bits indicating the signal amplitude information in the second PPDU is reduced, thereby improving resource utilization.

Based on any one of the first aspect, the second aspect, and the first implementation to the third implementation of this application, in a fourth implementation of this application, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

The foregoing implementation provides specific calculation manners of the first amplitude difference and the second amplitude difference, which facilitates implementation of the solution. This helps the second device indicate the multipath signal component amplitude information via the at least one first amplitude difference and the at least one second amplitude difference, and reduce a quantity of bits indicating the signal amplitude information in the second PPDU, thereby improving resource utilization.

Based on any one of the first aspect, the second aspect, and the first implementation to the fourth implementation of this application, in a fifth implementation of this application, the time information includes at least one delay difference, the at least one delay difference corresponds to the at least one transmission path, each delay difference is a time difference between arrival time at which the first PPDU transmitted on a transmission path corresponding to the delay difference arrives at the second device and arrival time at which the first PPDU transmitted on a second transmission path arrives at the second device, and the second transmission path is a transmission path that is in the at least one transmission path and on which transmission time of the first PPDU is the shortest.

The foregoing implementation shows content specifically included in the time information, and the second device indicates transmission time information of the first PPDU on the at least one transmission path by using the at least one delay difference. This helps the first device determine information such as a distance between a target on the transmission path and the first device based on the time information. In addition, the second device indicates the transmission time information of the first PPDU on the at least one transmission path by using the at least one delay difference. When the time information can be correctly indicated, this helps reduce a quantity of bits indicating the time information in the second PPDU, and reduces bit overheads.

Based on any one of the first aspect, the second aspect, and the first implementation to the fifth implementation of this application, in a sixth implementation of this application, the angle information includes at least one angle of arrival, the at least one angle of arrival corresponds to the at least one transmission path, and each angle of arrival is an angle of arrival at which the first PPDU transmitted on a transmission path corresponding to the angle of arrival arrives at the second device.

The foregoing implementation shows content included in the angle information, and the second device indicates, by using the at least one angle of arrival, the angle of arrival at which the first PPDU on the at least one transmission path arrives at the second device. This helps the first device determine a specific location of a target on the transmission path based on the angle information.

Based on any one of the first aspect, the second aspect, and the first implementation to the sixth implementation of this application, in a seventh implementation of this application, the location information of the second device includes at least one of the following: longitude information of the second device, latitude information of the second device, and altitude information of the second device.

In this implementation, the second device can further feed back the location information of the second device to the first device, where the location information specifically includes the longitude, latitude, and altitude information of the second device. This helps the first device determine a location of a target in the surrounding environment based on the location information of the second device.

Based on either of the first aspect and the first implementation to the seventh implementation of this application, in an eighth implementation of this application, before the first device sends the first PPDU to the second device, the method further includes:

The first device sends a sensing measurement request to the second device, where the sensing measurement request is used to request the second device to assist the first device in performing sensing measurement; and the first device receives a sensing measurement consent response from the second device, where the sensing measurement consent response indicates that the second device agrees to assist the first device in performing sensing measurement.

In this implementation, before the sensing measurement is performed between the first device and the second device, the first device can perform sensing measurement negotiation with the second device. This helps the second device assist the first device in performing the sensing measurement, implement sensing of the target in the surrounding environment, and feed back the corresponding sensing measurement result to the first device.

Based on either of the first aspect and the first implementation to the eighth implementation of this application, in a ninth implementation of this application, after the first device sends the first PPDU to the second device, and before the first device receives the second PPDU from the second device, the method further includes: The first device sends a measurement report request to the second device, where the measurement report request is used to request the second device to feed back the sensing measurement result.

In this implementation, the first device can request the second device to feed back the sensing measurement result, so that the second device can feed back the sensing measurement result to the first device. This helps the first device determine information such as the location of the target in the surrounding environment based on the sensing measurement result.

Based on either of the second aspect and the first implementation to the seventh implementation of this application, in a tenth implementation of this application, before the second device receives the first PPDU from the first device, the method further includes:

The second device receives a sensing measurement request from the first device, where the sensing measurement request is used to request the second device to assist the first device in performing sensing measurement; and the second device sends a sensing measurement consent response to the first device, where the sensing measurement consent response indicates that the second device agrees to assist the first device in performing sensing measurement.

In the foregoing implementation, before the sensing measurement is performed between the first device and the second device, the first device can perform sensing measurement negotiation with the second device. This helps the second device assist the first device in performing the sensing measurement, implement sensing of the target in the surrounding environment, and feed back the corresponding sensing measurement result to the first device.

Based on any one of the second aspect, the first implementation to the seventh implementation of this application, and the tenth implementation of this application, in an eleventh implementation of this application, after the second device receives the first PPDU from the first device, and before the second device sends the second PPDU to the first device, the method further includes: The second device receives a measurement report request from the first device, where the measurement report request is used to request the second device to feed back the sensing measurement result.

In this implementation, the second device receives the measurement report request from the first device, to request to feed back the sensing measurement result, so that the second device can feed back the sensing measurement result to the first device. This helps the first device determine information such as the location of the target in the surrounding environment based on the sensing measurement result.

Based on the first aspect, the second aspect, and the first implementation to the eleventh implementation of this application, in a twelfth implementation of this application, the second PPDU includes a channel measurement feedback element, and the sensing measurement result is carried in the channel measurement feedback element. In this implementation, a specific field for carrying the sensing measurement result is provided, which facilitates implementation of the solution.

Based on the first aspect, the second aspect, and the first implementation to the twelfth implementation of this application, in a thirteenth implementation of this application, the channel measurement feedback element includes at least one of the following fields: a multipath quantity field, a multipath amplitude field, a multipath delay field, a multipath signal angle of arrival field, and a device location information field, where the multipath quantity field is used to carry the transmission path quantity information, the multipath amplitude field is used to carry the multipath signal component amplitude information, the multipath delay field is used to carry the time information, the multipath signal angle of arrival field is used to carry the angle information, and the device location information field is used to carry the location information of the second device.

In this implementation, the channel measurement feedback element includes a plurality of subfields that may be respectively used to carry information included in the sensing measurement result. This helps the first device parse the sensing measurement result.

A third aspect of this application provides a sensing measurement method. The method includes:

A first device sends a trigger frame to a second device, where the trigger frame is used to trigger the second device to send a first PPDU, and the first PPDU is used for sensing measurement; the first device receives the first PPDU from the second device; and the first device performs sensing measurement on the first PPDU, to obtain a sensing measurement result.

The foregoing technical solution is applicable to a UWB wireless communication system, and the first device and the second device may be two UWB devices in the UWB wireless communication system. The first device sends the trigger frame to the second device, where the trigger frame is used to trigger the second device to send the first PPDU, and the first PPDU is used for the sensing measurement. The first device receives the first PPDU from the second device, and the first device performs the sensing measurement on the first PPDU, to obtain the sensing measurement result. In this way, the UWB device can sense a surrounding environment to obtain a corresponding sensing measurement result, and there is no need to feed back the sensing measurement result.

A fourth aspect of this application provides a sensing measurement method. The method includes:

A second device receives a trigger frame from a first device, where the trigger frame is used to trigger the first device to send a first PPDU, and the first PPDU is used for sensing measurement; and the second device sends the first PPDU to the first device.

The foregoing technical solution is applicable to a UWB wireless communication system, and the first device and the second device may be two UWB devices in the UWB wireless communication system. The first device sends the trigger frame to the second device, where the trigger frame is used to trigger the second device to send the first PPDU, and the first PPDU is used for the sensing measurement. The second device sends the first PPDU to the first device. This helps the first device perform sensing measurement on the first PPDU, to obtain a sensing measurement result. In this way, the UWB device can sense a surrounding environment to obtain a corresponding sensing measurement result, and there is no need to feed back the sensing measurement result.

Based on either of the first aspect and the second aspect, in a first implementation of this application, the trigger frame includes first indication information, and the first indication information indicates a format of the first PPDU sent by the second device.

In this implementation, the first device may indicate the format of the first PPDU to the second device by using the trigger frame. This helps the second device send the first PPDU in the indicated format of the first PPDU. This helps the first device parse the first PPDU, and perform sensing measurement on the first PPDU, to obtain a corresponding sensing measurement result, and there is no need to feed back the sensing measurement result.

Based on any one of the first aspect, the second aspect, and the first implementation of this application, in a second implementation of this application, the first indication information includes at least one of the following: a scrambled timestamp sequence (scrambled timestamp sequence, STS) key, a signal time length, or a quantity of STS sequence repetitions.

In this implementation, the first indication information may indicate the STS key, the signal time length, and the quantity of STS sequence repetitions to the second device. In this way, the second device may generate the first PPDU based on the information. For example, the first PPDU includes an STS, the STS is generated based on the STS key, a length of the STS is the signal time length, and the STS is repeatedly placed in the first PPDU. The first device may perform a correlation operation on a locally determined STS and the STS in the first PPDU, to obtain some corresponding sensing measurement quantities. The first device parses the first PPDU by using the STS, which helps improve security of parsing the first PPDU by the first device and time measurement.

Based on any one of the first aspect, the second aspect, and the first implementation and the second implementation of this application, in a third implementation of this application, the sensing measurement result includes at least one of the following: transmission path quantity information, multipath signal component amplitude information, time information, and angle information.

The transmission path quantity information indicates a quantity of transmission paths between the first device and the second device, the multipath signal component amplitude information includes signal amplitude information corresponding to the first PPDU on at least one transmission path between the first device and the second device, the time information includes time information corresponding to the first PPDU on the at least one transmission path, and the angle information includes information about an angle at which the first PPDU arrives at the first device on the at least one transmission path.

The foregoing implementation shows specific content of the sensing measurement result, which specifically includes the signal amplitude information, the time information, and the angle information of the first PPDU transmitted on the at least one transmission path between the first device and the second device, the quantity of transmission paths between the first device and the second device, and the like. This helps the first device determine information such as the location and the speed of the target in the surrounding environment based on the sensing measurement result, and implement sensing of the target in the surrounding environment.

Based on any one of the first aspect, the second aspect, and the first implementation to the third implementation of this application, in a fourth implementation of this application, the multipath signal component amplitude information includes in-phase signal amplitude information and quadrature signal amplitude information, the in-phase amplitude information includes amplitude information of an in-phase signal corresponding to the first PPDU on the at least one transmission path, and the quadrature amplitude information includes amplitude information of a quadrature signal corresponding to the first PPDU on the at least one transmission path.

In this implementation, the multipath signal component amplitude information indicates signal energy of the first PPDU on each transmission path from two dimensions (the in-phase signal of the first PPDU and the quadrature signal of the first PPDU). This helps the first device determine, based on the multipath signal component amplitude information, a signal amplitude change and a signal phase change on each transmission path. Because the phase change of the signal may indicate a moving speed of a target in an environment to some extent, the first device may determine information such as the moving speed of the target based on the multipath signal component amplitude information.

Based on any one of the first aspect, the second aspect, and the first implementation to the fourth implementation of this application, in a fifth implementation of this application, the in-phase signal amplitude information includes at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has a strongest signal capability; and the quadrature signal amplitude information includes at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

In the foregoing implementation, the in-phase signal amplitude information may be indicated by using the at least one first amplitude difference, and the quadrature signal amplitude information may be indicated by using the at least one second amplitude difference. The first device may determine signal amplitude information of the first PPDU on each transmission path via the at least one first amplitude difference and the at least one second amplitude difference.

Based on any one of the first aspect, the second aspect, and the first implementation to the fifth implementation of this application, in a sixth implementation of this application, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

The foregoing implementation provides specific calculation manners of the first amplitude difference and the second amplitude difference, which facilitates implementation of the solution. This helps the first device determine signal amplitude information of the first PPDU on each transmission path via the at least one first amplitude difference and the at least one second amplitude difference.

Based on any one of the first aspect, the second aspect, and the first implementation to the sixth implementation of this application, in a seventh implementation of this application, the time information includes at least one delay difference, the at least one delay difference corresponds to the at least one transmission path, each delay difference is a time difference between arrival time at which the first PPDU transmitted on a transmission path corresponding to the delay difference arrives at the first device and arrival time at which the first PPDU transmitted on a second transmission path arrives at the first device, and the second transmission path is a transmission path that is in the at least one transmission path and on which transmission time of the first PPDU is the shortest.

The foregoing implementation shows content specifically included in the time information, and the first device indicates transmission time information of the first PPDU on the at least one transmission path by using the at least one delay difference. This helps the first device determine information such as a distance between a target on the transmission path and the first device based on the time information.

Based on any one of the first aspect, the second aspect, and the first implementation to the seventh implementation of this application, in an eighth implementation of this application, the angle information includes at least one angle of arrival, the at least one angle of arrival corresponds to the at least one transmission path, and each angle of arrival is an angle of arrival at which the first PPDU transmitted on a transmission path corresponding to the angle of arrival arrives at the first device.

The foregoing implementation shows content included in the angle information, and the first device indicates, by using the at least one angle of arrival, the angle of arrival at which the first PPDU on the at least one transmission path arrives at the first device. This helps the first device determine a specific location of a target on the at least one transmission path based on the angle information.

A fifth aspect of this application provides a first communication apparatus, including:

a sending unit, configured to send a first PPDU to a second communication apparatus, where the first PPDU is used for sensing measurement; and
a receiving unit, configured to receive a second PPDU from the second communication apparatus, where the second PPDU includes a sensing measurement result, and the sensing measurement result is obtained by the second communication apparatus by performing sensing measurement on the first PPDU.

A sixth aspect of this application provides a second communication apparatus, including:

a receiving unit, configured to receive a first PPDU from a first communication apparatus;
a processing unit, configured to perform sensing measurement on the first PPDU, to obtain a sensing measurement result; and
a sending unit, configured to send a second PPDU to the first communication apparatus, where the second PPDU includes the sensing measurement result.

Based on either of the fifth aspect and the sixth aspect, in a first implementation of this application, the sensing measurement result includes at least one of the following: transmission path quantity information, multipath signal component amplitude information, time information, angle information, and location information of the second communication apparatus.

The transmission path quantity information indicates a quantity of transmission paths between the first communication apparatus and the second communication apparatus, the multipath signal component amplitude information includes signal amplitude information corresponding to the first PPDU on at least one transmission path between the first communication apparatus and the second communication apparatus, the time information includes time information corresponding to the first PPDU on the at least one transmission path, and the angle information includes information about an angle at which the first PPDU arrives at the second communication apparatus on the at least one transmission path.

Based on any one of the fifth aspect, the sixth aspect, and the first implementation of this application, in a second implementation of this application, the multipath signal component amplitude information includes in-phase signal amplitude information and quadrature signal amplitude information, the in-phase amplitude information includes amplitude information of an in-phase signal corresponding to the first PPDU on the at least one transmission path, and the quadrature amplitude information includes amplitude information of a quadrature signal corresponding to the first PPDU on the at least one transmission path.

Based on any one of the fifth aspect, the sixth aspect, and the first implementation and the second implementation of this application, in a third implementation of this application, the in-phase signal amplitude information includes at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has strongest signal energy; and the quadrature signal amplitude information includes at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

Based on any one of the fifth aspect, the sixth aspect, and the first implementation to the third implementation of this application, in a fourth implementation of this application, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

Based on any one of the fifth aspect, the sixth aspect, and the first implementation to the fourth implementation of this application, in a fifth implementation of this application, the time information includes at least one delay difference, the at least one delay difference corresponds to the at least one transmission path, each delay difference is a time difference between arrival time at which the first PPDU transmitted on a transmission path corresponding to the delay difference arrives at the second communication apparatus and arrival time at which the first PPDU transmitted on a second transmission path arrives at the second communication apparatus, and the second transmission path is a transmission path that is in the at least one transmission path and on which transmission time of the first PPDU is the shortest.

Based on any one of the fifth aspect, the sixth aspect, and the first implementation to the fifth implementation of this application, in a sixth implementation of this application, the angle information includes at least one angle of arrival, the at least one angle of arrival corresponds to the at least one transmission path, and each angle of arrival is an angle of arrival at which the first PPDU transmitted on a transmission path corresponding to the angle of arrival arrives at the second communication apparatus.

Based on any one of the fifth aspect, the sixth aspect, and the first implementation to the sixth implementation of this application, in a seventh implementation of this application, the location information of the second communication apparatus includes at least one of the following: longitude information of the second communication apparatus, latitude information of the second communication apparatus, or altitude information of the second communication apparatus.

Based on either of the fifth aspect and the first implementation to the seventh implementation of this application, in an eighth implementation of this application, the sending unit is further configured to:

send a sensing measurement request to the second communication apparatus, where the sensing measurement request is used to request the second communication apparatus to assist the first communication apparatus in performing sensing measurement; and
the receiving unit is further configured to:
receive a sensing measurement consent response from the second communication apparatus, where the sensing measurement consent response indicates that the second communication apparatus agrees to assist the first communication apparatus in performing sensing measurement.

Based on either of the fifth aspect and the first implementation to the eighth implementation of this application, in a ninth implementation of this application, the sending unit is further configured to:
send a measurement report request to the second communication apparatus, where the measurement report request is used to request the second communication apparatus to feed back the sensing measurement result.

Based on either of the sixth aspect and the first implementation to the seventh implementation of this application, in a tenth implementation of this application, the receiving unit is further configured to:

receive a sensing measurement request from the first communication apparatus, where the sensing measurement request is used to request the second communication apparatus to assist the first communication apparatus in performing sensing measurement; and

the sending unit is further configured to:

send a sensing measurement consent response to the first communication apparatus, where the sensing measurement consent response indicates that the second communication apparatus agrees to assist the first communication apparatus in performing sensing measurement.

Based on any one of the sixth aspect, the first implementation to the seventh implementation of this application, and the tenth implementation of this application, in an eleventh implementation of this application, the receiving unit is further configured to:

receive a measurement report request from the first communication apparatus, where the measurement report request is used to request the second communication apparatus to feed back the sensing measurement result.

Based on the fifth aspect, the sixth aspect, and the first implementation to the eleventh implementation of this application, in a twelfth implementation of this application, the second PPDU includes a channel measurement feedback element, and the sensing measurement result is carried in the channel measurement feedback element.

Based on the fifth aspect, the sixth aspect, and the first implementation to the twelfth implementation of this application, in a thirteenth implementation of this application, the channel measurement feedback element includes at least one of the following fields: a multipath quantity field, a multipath amplitude field, a multipath delay field, a multipath signal angle of arrival field, and a device location information field, where the multipath quantity field is used to carry the transmission path quantity information, the multipath amplitude field is used to carry the multipath signal component amplitude information, the multipath delay field is used to carry the time information, the multipath signal angle of arrival field is used to carry the angle information, and the device location information field is used to carry the location information of the second communication apparatus.

A seventh aspect of this application provides a first communication apparatus, including:

a sending unit, configured to send a trigger frame to a second communication apparatus, where the trigger frame is used to trigger the second communication apparatus to send a first PPDU, and the first PPDU is used for sensing measurement;

a receiving unit, configured to receive the first PPDU from the second communication apparatus; and

a processing unit, configured to perform sensing measurement on the first PPDU, to obtain a sensing measurement result.

An eighth aspect of this application provides a second communication apparatus, including:

a receiving unit, configured to receive a trigger frame from a first communication apparatus, where the trigger frame is used to trigger the first communication apparatus to send a first PPDU, and the first PPDU is used for sensing measurement; and

a sending unit, configured to send the first PPDU to the first communication apparatus.

Based on either of the seventh aspect and the eighth aspect, in a first implementation of this application, the trigger frame includes first indication information, and the first indication information indicates a format of the first PPDU sent by the second communication apparatus.

Based on any one of the seventh aspect, the eighth aspect, and the first implementation of this application, in a second implementation of this application, the first indication information includes at least one of the following: an STS key, a signal time length, or a quantity of STS sequence repetitions.

Based on any one of the seventh aspect, the eighth aspect, and the first implementation and the second implementation of this application, in a third implementation of this application, the sensing measurement result includes at least one of the following: transmission path quantity information, multipath signal component amplitude information, time information, and angle information.

The transmission path quantity information indicates a quantity of transmission paths between the first communication apparatus and the second communication apparatus, the multipath signal component amplitude information includes signal amplitude information corresponding to the first PPDU on at least one transmission path between the first communication apparatus and the second communication apparatus, the time information includes time information corresponding to the first PPDU on the at least one transmission path, and the angle information includes information about an angle at which the first PPDU arrives at the first communication apparatus on the at least one transmission path.

Based on any one of the seventh aspect, the eighth aspect, and the first implementation to the third implementation of this application, in a fourth implementation of this application, the multipath signal component amplitude information includes in-phase signal amplitude information and quadrature signal amplitude information, the in-phase amplitude information includes amplitude information of an in-phase signal corresponding to the first PPDU on the at least one transmission path, and the quadrature amplitude information includes amplitude information of a quadrature signal corresponding to the first PPDU on the at least one transmission path.

Based on any one of the seventh aspect, the eighth aspect, and the first implementation to the fourth implementation of this application, in a fifth implementation of this application, the in-phase signal amplitude information includes at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has a strongest signal capability; and the quadrature signal amplitude information includes at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

Based on any one of the seventh aspect, the eighth aspect, and the first implementation to the fifth implementation of this application, in a sixth implementation of this application, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

Based on any one of the seventh aspect, the eighth aspect, and the first implementation to the sixth implementation of this application, in a seventh implementation of this application, the time information includes at least one delay difference, the at least one delay difference corresponds to the at least one transmission path, each delay difference is a time difference between arrival time at which the first PPDU transmitted on a transmission path corresponding to the delay difference arrives at the first communication apparatus and arrival time at which the first PPDU transmitted on a second transmission path arrives at the first communication apparatus, and the second transmission path is a transmission path that is in the at least one transmission path and on which transmission time of the first PPDU is the shortest.

Based on any one of the seventh aspect, the eighth aspect, and the first implementation to the seventh implementation of this application, in an eighth implementation of this application, the angle information includes at least one angle of arrival, the at least one angle of arrival corresponds to the at least one transmission path, and each angle of arrival is an angle of arrival at which the first PPDU transmitted on a transmission path corresponding to the angle of arrival arrives at the first communication apparatus.

A ninth aspect of this application provides a communication apparatus. The communication apparatus includes a processor and a memory. The memory stores a computer program or computer instructions, and the processor is configured to invoke and run the computer program or the computer instructions stored in the memory, so that any implementation according to any one of the first aspect to the fourth aspect is performed.

Optionally, the communication apparatus further includes a transceiver, and the processor is configured to control the transceiver to receive and send a signal.

A tenth aspect of this application provides a communication apparatus. The communication apparatus includes a processor. The processor is configured to invoke a computer program or computer instructions in a memory, so that any implementation according to any one of the first aspect to the fourth aspect is performed.

Optionally, the communication apparatus further includes a transceiver, and the processor is configured to control the transceiver to receive and send a signal.

An eleventh aspect of this application provides a communication apparatus. The communication apparatus includes a processor, configured to perform any implementation according to any one of the first aspect to the fourth aspect.

A twelfth aspect of this application provides a computer program product including instructions. When the computer program product runs on a computer, any implementation according to any one of the first aspect to the fourth aspect is performed.

A thirteenth aspect of this application provides a computer-readable storage medium, including computer instructions. When the instructions are run on a computer, any implementation according to any one of the first aspect to the fourth aspect is performed.

A fourteenth aspect of this application provides a chip apparatus, including a processor, configured to invoke a computer program or computer instructions in a memory, so that any implementation according to any one of the first aspect to the fourth aspect is performed.

Optionally, the chip apparatus further includes a memory, and the memory is configured to store a computer degree, computer instructions, or the like. The chip apparatus may include a chip or may include a chip and another discrete component.

Optionally, the processor is coupled to the memory through an interface.

A fifteenth aspect of this application provides a communication system. The communication system includes the first communication apparatus according to the fifth aspect and the second communication device according to the sixth aspect. Alternatively, the communication system includes the first communication apparatus according to the seventh aspect and the second communication device according to the eighth aspect.

According to the foregoing technical solutions, it can be learned that embodiments of this application have the following advantages:

According to the foregoing technical solutions, the first device sends the first PPDU to the second device, where the first PPDU is used for sensing measurement; and then the first device receives the second PPDU from the second device, where the second PPDU includes the sensing measurement result, and the sensing measurement result is obtained by the second device by performing the sensing measurement on the first PPDU. It can be learned that, in the technical solutions of this application, the first device receives the second PPDU from the second device, where the second PPDU includes the sensing measurement result, and the sensing measurement result is obtained by the second device by performing the sensing measurement on the first PPDU. In this way, the second device can sense the target in the surrounding environment and feed back the corresponding sensing measurement result to the first device.

**BRIEF DESCRIPTION OF DRAWINGS**

FIG. 1 is a schematic diagram of an architecture of a wireless communication system according to an embodiment of this application;

FIG. 2 is a schematic diagram of another architecture of a wireless communication system according to an embodiment of this application;

FIG. 3 is a schematic diagram of a structure of a PPDU according to an embodiment of this application;

FIG. 4(a) is a schematic diagram of another structure of a PPDU according to an embodiment of this application;

FIG. 4(b) is a schematic diagram of another structure of a PPDU according to an embodiment of this application;

FIG. 4(c) is a schematic diagram of another structure of a PPDU according to an embodiment of this application;

FIG. 5 is a schematic diagram of a distance between a device A and a device B obtained in a ranging process according to an embodiment of this application;

FIG. 6 is a schematic diagram of an embodiment of a sensing measurement method according to an embodiment of this application;

FIG. 7 is a schematic flowchart of a sensing measurement method according to an embodiment of this application;

FIG. 8 is a schematic diagram of a scenario of a sensing measurement method according to an embodiment of this application;

FIG. 9 is a schematic diagram of another embodiment of a sensing measurement method according to an embodiment of this application;

FIG. 10 is another schematic flowchart of a sensing measurement method according to an embodiment of this application;

FIG. 11 is a schematic diagram of a structure of a first communication apparatus according to an embodiment of this application;

FIG. 12 is a schematic diagram of a structure of a second communication apparatus according to an embodiment of this application;

FIG. 13 is a schematic diagram of another structure of a first communication apparatus according to an embodiment of this application;

FIG. 14 is a schematic diagram of another structure of a second communication apparatus according to an embodiment of this application;

FIG. 15 is a schematic diagram of another structure of a first communication apparatus according to an embodiment of this application; and

FIG. 16 is a schematic diagram of another structure of a second communication apparatus according to an embodiment of this application.

**DESCRIPTION OF EMBODIMENTS**

Embodiments of this application provide a sensing measurement method and a related apparatus, so that a second device can sense a target in a surrounding environment and feed back a corresponding sensing measurement result to a first device.

The following clearly and completely describes technical solutions in embodiments of this application with reference to accompanying drawings in embodiments of this application.

In descriptions of this application, unless otherwise specified, "/" means "or". For example, A/B may indicate A or B. A term "and/or" in this specification describes only an association relationship between associated objects and indicates that three relationships may exist. For example, A and/or B may indicate the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c. a, b, and c each may be singular or plural.

In this application, words such as "example" or "for example" are used to indicate giving an example, an illustration, or a description. Any embodiment or design scheme described as "example", "such as" or "for example" in this application should not be explained as being more preferred or having more advantages than another embodiment or design scheme. Exactly, use of the words "example", "such as", "for example", or the like is intended to present a concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element indicated in a singular form is intended to indicate "one or more" or "at least one", but does not indicate "one and only one", unless otherwise specified.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and do not constitute any limitation on the technical solutions provided in embodiments of this application.

The technical solutions provided in this application are applied to a wireless personal area network (Wireless Personal Area Network, WPAN) based on an ultra-wideband (Ultra-WideBand, UWB) technology. For example, the technical solutions provided in this application are applied to the IEEE 802.15 series standards such as the IEEE 802.15.4a standard, the IEEE 802.15.4z standard, the IEEE 802.15.4ab standard, or a future-generation UWB WPAN standard.

Although embodiments of this application mainly use the WPAN, especially a network applied to the IEEE 802.15 series standards as an example for description, a person skilled in the art can easily understand that aspects in this application may be extended to other networks using various standards or protocols, for example, a wireless local area network (Wireless Local Area Network, WLAN), Bluetooth (BLUETOOTH), a high performance radio LAN (High Performance Radio LAN, HIPERLAN) (a wireless standard similar to the IEEE 802.11 standard and mainly used in Europe), a wide area network (WAN), or other networks currently known or later developed. Therefore, regardless of a used coverage area and wireless access protocol, various aspects provided in this application are applied to any proper wireless network.

Embodiments of this application may be further applied to a wireless local area network system, for example, an internet of things (Internet of Things, IoT) or vehicle-to-X (Vehicle-to-X, V2X) network. Certainly, embodiments of this application may be further applied to other possible communication systems, for example, a long term evolution (Long Term Evolution, LTE) system, an LTE frequency division duplex (Frequency Division Duplex, FDD) system, LTE time division duplex (Time Division Duplex, TDD), a universal mobile telecommunications system (Universal Mobile Telecommunications System, UMTS), a worldwide interoperability for microwave access (Worldwide Interoperability For Microwave Access, WiMAX) communication system, a 5th generation (5th generation, 5G) communication system, and a future 6th generation (6th generation, 6G) communication system.

The communication systems applicable to this application are merely examples for description, and communication systems applicable to this application are not limited thereto. This is stated herein once for all, and details are not described below again.

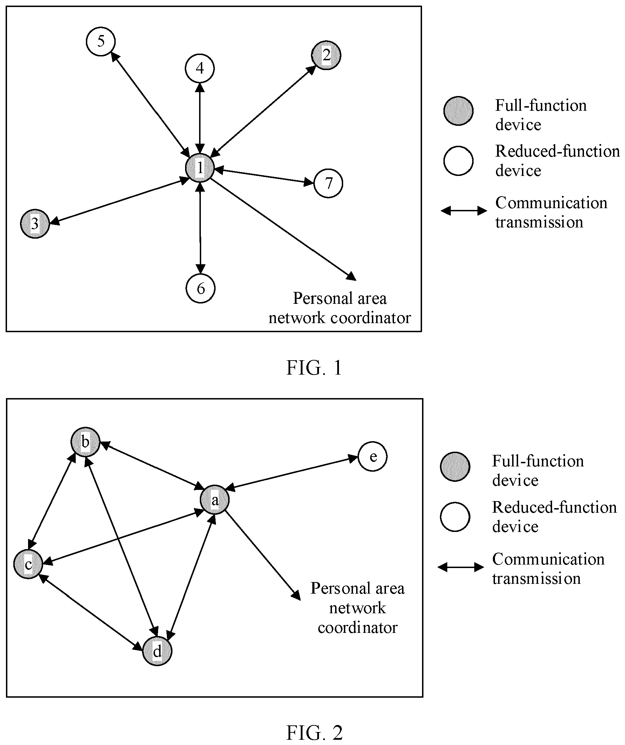

FIG. 1 is a schematic diagram of an architecture of a wireless communication system according to an embodiment of this application.

As shown in FIG. 1, the wireless communication system uses a star topology structure. The star topology structure includes a central control device and one or more distribution devices. Communication transmission may be performed between the central control device and the one or more distribution devices. The network shown in FIG. 1 may be a WPAN, and the central control device may be a WPAN coordinator, that is, act as a coordinator in the WPAN. According to the technical solutions of this application, the central control device and the distribution device can sense a target in a surrounding environment, and obtain a corresponding sensing measurement result. For a function of the device, the wireless communication system includes two types of devices: a full-function device (Full-Function Device) and a reduced-function device (Reduced-Function Device) respectively.

FIG. 2 is a schematic diagram of another architecture of a wireless communication system according to an embodiment of this application.

As shown in FIG. 2, the wireless communication system uses a point-to-point topology structure. The network shown in FIG. 2 may be a WPAN, and a device a shown in FIG. 2 may serve as a WPAN coordinator, that is, act as a coordinator in the WPAN. According to the technical solutions of this application, different devices in FIG. 2 can sense a target in a surrounding environment, and obtain a corresponding sensing measurement result. For a function of the device, the wireless communication system includes two types of devices: a full-function device and a reduced-function device respectively.

The wireless communication system to which this application is applicable includes a first device and a second device. The first device includes a communication server, a router, a switch, a bridge, a computer device, a terminal device, a PAN coordinator, and the like. The second device includes a communication server, a router, a switch, a bridge, a computer device, a terminal device, and the like.

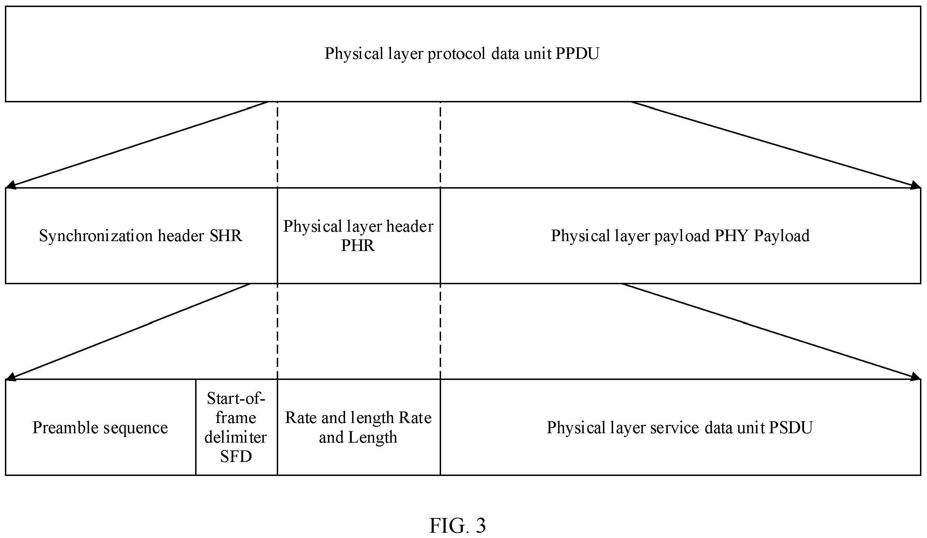

Currently, a frame structure of a physical layer protocol data unit (PHY Protocol Data Unit, PPDU) in the UWB 802.15.4 standard is shown in FIG. 3, and the PPDU includes a synchronization header (Synchronization Header, SHR), a physical layer header (PHY Header, PHR), and a physical layer payload (PHY Payload).

The SHR includes a standard predefined preamble sequence (Preamble Sequence), and is used by a receive end device to perform PPDU detection and synchronization. The PHR carries some physical layer indication information, for example, modulation and coding information and a PPDU length, and is used to assist the receive end device in correctly demodulating data. The receive end device is a device that receives the PPDU.

The receive end device may perform a correlation operation on a predefined preamble sequence and a preamble sequence in the PPDU (namely, a received signal), and determine, based on information such as a peak location in a result obtained through the correlation operation, arrival time at which the PPDU arrives at the receive end device. Usually, the arrival time is time relative to a ranging marker (Ranging Marker, RMARKER), and the ranging marker herein is time at which a first pulse immediately following a start-of-frame delimiter (Start-of-Frame Delimiter, SFD) in the SHR arrives at a local antenna of the receive end device.

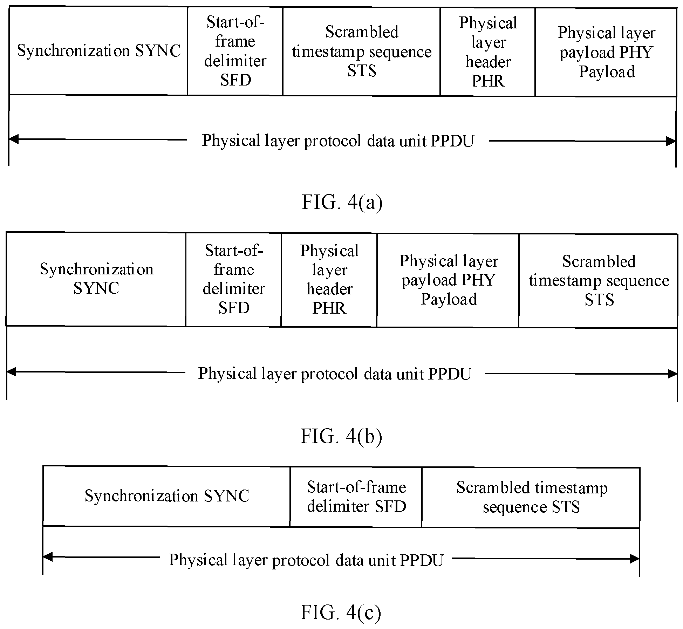

To further enhance security of time measurement, a scrambled timestamp sequence (Scrambled Timestamp Sequence, STS) is introduced in the 802.15.4z standard. The STS is a pseudo-random sequence, and only a specific receive end device can learn of the STS. The receive end device performs a correlation operation on the STS and the PPDU (namely, the received signal), and estimates, based on the peak location in the correlation result obtained through the correlation operation, information of the arrival time at which the PPDU arrives at the receive end device. In an implementation, optionally, the PPDU includes an STS, and the STS may be placed before or after the PHY Payload, or may independently exist by replacing the PHY Payload. For example, as shown in FIG. 4(a) to FIG. 4(c), in FIG. 4(a), the STS is before the PHR and the PHY Payload. In FIG. 4(b), the STS is after the PHY Payload. In FIG. 4(c), the PPDU includes the STS, but does not include the PHY Payload.

The UWB wireless standard records a ranging procedure through an ultra-wideband signal. The following describes the ranging process.

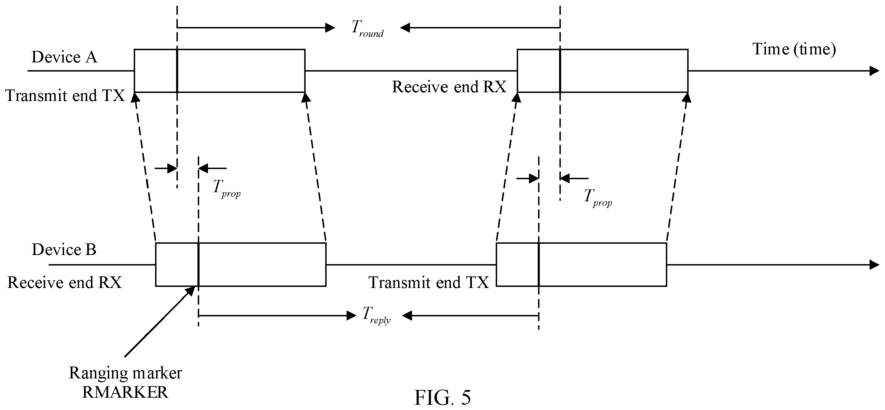

For example, as shown in FIG. 5, a device A sends a ranging PPDU to a device B, and records sending time of the ranging PPDU. The device B determines, based on a preamble sequence or an STS sequence in the ranging PPDU, arrival time at which the ranging PPDU arrives at the device B. The device B sends a response PPDU to the device A, and records sending time of the response PPDU. The device A determines arrival time of the response PPDU based on a preamble sequence or an STA sequence in the first response PPDU. After the foregoing procedure, the device A may determine round-trip time $T_{round}$ of this interaction based on the sending time of the ranging PPDU and the arrival time of the response PPDU. Similarly, the device B may determine a reply time interval $T_{reply}$ based on the time of receiving the ranging PPDU and the time of sending the response PPDU. Therefore, transmission time $T_{prop}$ between the device A and the device B may be calculated according to the following Formula 1.

$$T_{prop} = \frac{(T_{round} - T_{reply})}{2} \qquad \text{Formula 1}$$

After sending the response PPDU, the device B may send the calculated reply time interval $T_{reply}$ to the device A. This helps the device A calculate the transmission time $T_{prop}$ of the ranging PPDU according to the foregoing Formula 1. Correspondingly, a distance between the device A and the device B is equal to the transmission time $T_{prop}$ multiplied by a speed of light c.

It can be learned that the ranging process implements distance measurement between two devices. Currently, in a UWB technology, determining of arrival time of a line-of-sight signal is only concerned to determine the distance between the device A and the device B, and sensing of another target in a surrounding environment is not supported. In view of this, this application provides corresponding technical solutions, to implement sensing of another target in a surrounding environment in a UWB wireless communication system and obtain a corresponding sensing measurement result. The sensing measurement result may alternatively be referred to as a channel impulse response (Channel Impulse Response, CIR) measurement result. For details, refer to detailed descriptions of the following embodiments.

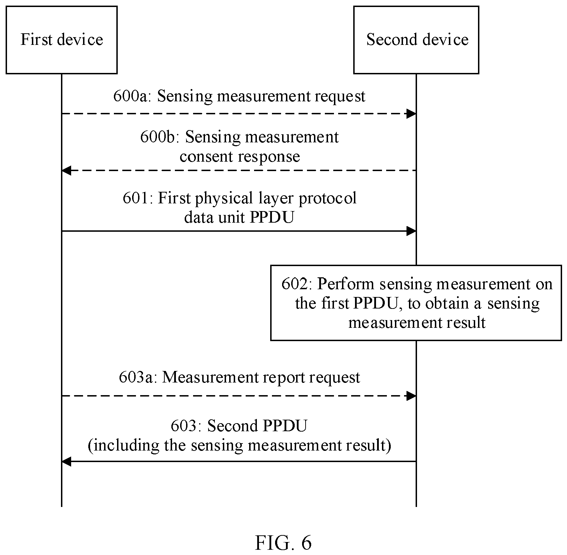

The technical solutions of this application are described below with reference to specific embodiments. It should be noted that, in the technical solution of this application, a first device may perform sensing measurement with one or more second devices, and receive a sensing measurement result separately obtained by the one or more second devices. This is not specifically limited in this application. In the following embodiment shown in FIG. 6, a sensing measurement process between the first device and the second device is used as an example to describe the technical solutions of this application.

FIG. 6 is a schematic diagram of an embodiment of a sensing measurement method according to an embodiment of this application. Refer to FIG. 6. The sensing measurement method includes:

601: A first device sends a first PPDU to a second device. Correspondingly, the second device receives the first PPDU from the first device.

The first PPDU is used for sensing measurement.

Specifically, the first PPDU includes a preamble sequence, where the preamble sequence is carried in an SHR field of the first PPDU. For details, refer to the schematic diagram of the frame structure of the PPDU shown in FIG. 3.

Optionally, the first PPDU further includes an STS. The STS is carried in an STS field of the first PPDU. For details, refer to the schematic diagrams of the frame structures of the PPDU shown in FIG. 4(a) to FIG. 4(c).

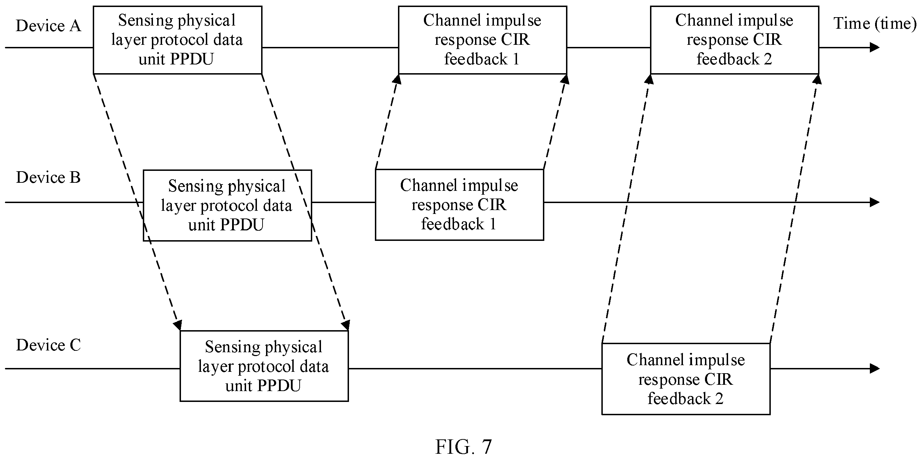

For example, as shown in FIG. 7, a device A sends sensing PPDUs to a device B and a device C, so that the device B and the device C perform sensing measurement on the sensing PPDU.

The technical solutions of this application are applicable to a UWB wireless communication system, and the first device and the second device may be two UWB devices in the UWB wireless communication system. The first PPDU may also be referred to as a sensing PPDU, and the two UWB devices perform sensing measurement on a surrounding environment by using the sensing PPDU.

In some implementations, the embodiment shown in FIG. 6 further includes step 600a and step 600b. Step 600a and step 600b may be performed before step 601.

600a: The first device sends a sensing measurement request to the second device. Correspondingly, the second device receives the sensing measurement request from the first device.

The sensing measurement request is used to request the second device to assist the first device in performing sensing measurement.

600b: The second device sends a sensing measurement consent response to the first device. Correspondingly, the first device receives the sensing measurement consent response from the second device.

The sensing measurement consent response indicates that the second device agrees to assist the first device in performing sensing measurement.

For example, as shown in FIG. 7, before sending the sensing PPDU, the device A may send sensing measurement requests to the device B and the device C. If the device B and the device C agree to assist the device A in performing sensing measurement, the device B and the device C separately feed back a sensing measurement consent response to the device A, to indicate that the device B and the device C agree to assist the device A in performing the sensing measurement.

It should be noted that, if the second device does not agree to assist the first device in performing the sensing measurement, the second device feeds back sensing measurement rejection response, to indicate that the second device refuses to assist the first device in performing the sensing measurement. In this case, in an implementation, the first device cannot perform sensing measurement with the second device, and the first device may select another device to perform sensing measurement.

602: The second device performs sensing measurement on the first PPDU, to obtain a sensing measurement result.

The sensing measurement result includes at least one of the following: transmission path quantity information, multipath signal component amplitude information, time information, angle information, and location information of the second device.

The following describes content included in the sensing measurement result.

1. The transmission path quantity information indicates a quantity of transmission paths between the first device and the second device, namely, a quantity of transmission paths used for communication transmission between the first device and the second device. Specifically, there is at least one transmission path between the first device and the second device, and the at least one transmission path is used for the communication transmission between the first device and the second device.

Specifically, after the second device receives the first PPDU, the second device may perform a correlation operation on a predefined preamble sequence or STS and the first PPDU. In a correlation operation process, if the second device determines the quantity of transmission paths between the first device and the second device based on a quantity of peak locations that appear in a correlation result, for example, in one sensing PPDU interaction process, the correlation result includes three peak locations, it indicates that there are three transmission paths between the first device and the second device.

2. The multipath signal component amplitude information includes signal amplitude information corresponding to the first PPDU on the at least one transmission path.

In some implementations, the multipath signal component amplitude information includes in-phase signal amplitude information and quadrature signal amplitude information. The in-phase signal amplitude information includes amplitude information of an in-phase signal corresponding to the first PPDU on the at least one transmission path. The quadrature signal amplitude information includes an amplitude signal of a quadrature signal corresponding to the first PPDU on the at least one transmission path.

In this implementation, the second device determines amplitude information of an in-phase signal and amplitude information of a quadrature signal of the first PPDU transmitted on each transmission path, and carries the amplitude information of the in-phase signal and the amplitude information of the quadrature signal in the sensing measurement result. In other words, a signal amplitude of the first PPDU transmitted on each transmission path is indicated via the amplitude information of the in-phase signal and the amplitude information of the quadrature signal of the first PPDU transmitted on each transmission path.

For example, the second device may perform a correlation operation on a predefined preamble sequence and a preamble sequence in the first PPDU, to obtain a correlation result. Alternatively, the second device may perform a correlation operation on a locally determined STS and an STS in the first PPDU, to obtain a correlation result. The correlation result includes a peak location corresponding to each transmission path. A signal X of the first PPDU transmitted on each transmission path may be indicated as $X=a+bi=\sqrt{a^2+b^2}(\cos\varphi+i\sin\varphi)$, where a real part a indicates an amplitude of the in-phase signal of the first PPDU, and b indicates an amplitude of the quadrature signal of the first PPDU. An absolute value of the amplitude of the signal of the first PPDU is indicated as $\sqrt{a^2+b^2}$, and a phase of the signal of the first PPDU is indicated as $\varphi$.

Optionally, the in-phase signal amplitude information includes at least one first amplitude difference, and the at least one first amplitude difference corresponds to the at least one transmission path. In other words, the at least one first amplitude difference one-to-one corresponds to the at least one transmission path, and each first amplitude difference corresponds to one transmission path.

Each first amplitude difference is determined based on an amplitude of an in-phase signal of the first PPDU transmitted on a transmission path corresponding to the first amplitude difference and an amplitude of an in-phase signal of the first PPDU transmitted on a first transmission path.

In a possible implementation, the first transmission path is a transmission path that is in the at least one transmission path and on which the first PPDU has strongest signal energy.

For example, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path.

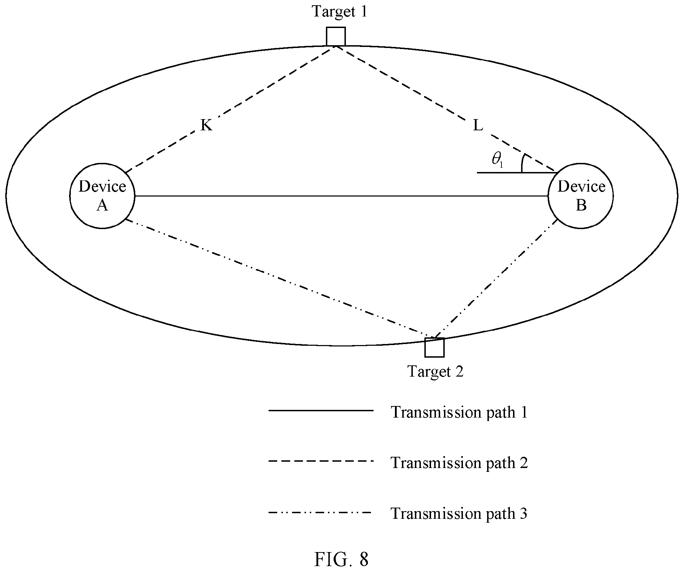

For example, as shown in FIG. 8, there are three transmission paths between a device A and a device B: a transmission path 1, a transmission path 2, and a transmission path 3 respectively. The transmission path 1 is a line of sight between the device A and the device B. The transmission path 2 is a transmission path from the device A to a target 1 and then to the device B. The transmission path 3 is a transmission path from the device A to a target 2 and then to the device B. The target 1 and the target 2 may be understood as targets (for example, passive targets) in a surrounding environment of the device A and the device B. The device B measures signal energy of the first PPDU on each transmission path, and determines that signal energy of the first PPDU on the transmission path 1 is the largest. This is merely an example. In actual application, a transmission path with largest signal energy may alternatively be another transmission path, and may not necessarily be the line of sight. The first PPDU transmitted on each transmission path includes two parts of signals: an in-phase (In-phase) signal and a quadrature (Quadrature) signal respectively. The second device may determine three first amplitude differences: D1, D2, and D3 respectively. D1 corresponds to the transmission path 1. Because the signal energy of the first PPDU on the transmission path 1 is the largest, D1 is equal to 0. $D2=\log_2(P)$, where $\log_2(P)$ means a logarithm of P, and P is a ratio of an amplitude of an in-phase signal of the first PPDU transmitted on the transmission path 2 to an amplitude of an in-phase signal of the first PPDU transmitted on the transmission path 1. $D3=\log_2(Q)$, where $\log_2(Q)$ means a logarithm of Q, and Q is a ratio of an amplitude of an in-phase signal of the first PPDU transmitted on the transmission path 3 to the amplitude of the in-phase signal of the first PPDU transmitted on the transmission path 1.

In the foregoing example, the first transmission path is the transmission path that is in the at least one transmission path and on which the first PPDU has the strongest signal energy. In actual application, this is not limited in this application. The first transmission path may be any transmission path in the at least one transmission path. For example, the first transmission path may alternatively be a transmission path that is in the at least one transmission path and on which the first PPDU has moderate signal energy.

Optionally, the quadrature signal amplitude information includes at least one second amplitude difference, and the at least one second amplitude difference corresponds to the at least one transmission path. In other words, the at least second amplitude difference one-to-one corresponds to the at least one transmission path, and each second amplitude difference corresponds to one transmission path.

Each second amplitude difference is determined based on an amplitude of a quadrature signal of the first PPDU transmitted on a transmission path corresponding to the second amplitude difference and an amplitude of a quadrature signal of the first PPDU transmitted on the first transmission path. For the first transmission path, refer to the foregoing related description.

Optionally, each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

For example, there are three transmission paths between the first device and the second device: a transmission path 1, a transmission path 2, and a transmission path 3 respectively. The transmission path 1 is a line of sight between the device A and the device B. The transmission path 2 is a transmission path from the device A to a target 1 and then to the device B. The transmission path 3 is a transmission path from the device A to a target 2 and then to the device B. The target 1 and the target 2 may be understood as targets (for example, passive targets) in a surrounding environment of the device A and the device B. The second device measures signal energy of the first PPDU on each transmission path, and determines that signal energy of the first PPDU on the transmission path 1 is the largest. The first PPDU transmitted on each transmission path includes two parts of signals: an in-phase signal and a quadrature signal respectively. The second device may determine three second amplitude differences: E1, E2, and E3 respectively. E1 corresponds to the transmission path 1. Because the signal energy of the first PPDU on the transmission path 1 is the largest, E1 is equal to 0. $E2=\log_2(R)$, where $\log_2(R)$ means a logarithm of R, and R is a ratio of an amplitude of a quadrature signal of the first PPDU transmitted on the transmission path 2 to an amplitude of a quadrature signal of the first PPDU transmitted on the transmission path 1. $E3=\log_2(S)$, where $\log_2(S)$ means a logarithm of S, and S is a ratio of an amplitude of a quadrature signal of the first PPDU transmitted on the transmission path 3 to the amplitude of the quadrature signal of the first PPDU transmitted on the transmission path 1.

It can be learned that the second device indicates the signal amplitude and the signal phase of the first PPDU on each transmission path via the at least one first amplitude difference and the at least one second amplitude difference.

3. The time information includes time information corresponding to the first PPDU on the at least one transmission path.

In some implementations, the time information includes at least one delay difference, and the at least one delay difference corresponds to the at least one transmission path. In other words, one delay difference corresponds to one transmission path, that is, the at least one delay difference one-to-one corresponds to the at least one transmission path.

Each delay difference is a time difference between arrival time at which the first PPDU transmitted on a transmission path corresponding to the delay difference arrives at the second device and arrival time at which the first PPDU transmitted on a second transmission path arrives at the second device.

In a possible implementation, the second transmission path is a transmission path that is in the at least one transmission path and on which transmission time of the first PPDU is the shortest. In other words, transmission time of the first PPDU on each transmission path may be indicated by a time difference between arrival time at which the first PPDU on different transmission paths arrives at the second device.

For example, as shown in FIG. 8, there are the three transmission paths between the device A and the device B: the transmission path 1, the transmission path 2, and the transmission path 3 respectively. The transmission path 1 is the line of sight between the device A and the device B. The transmission path 2 is the transmission path from the device A to the target 1 and then to the device B. The transmission path 3 is the transmission path from the device A to the target 2 and then to the device B. The device B measures arrival time at which the first PPDU on each transmission path arrives at the device B. For example, the device B may perform a correlation operation on a predefined preamble sequence and a preamble sequence included in the first PPDU on a transmission path, to obtain a correlation result, and a horizontal coordinate corresponding to a peak location in the correlation result is arrival time at which the first PPDU on the transmission path arrives at the device B. Alternatively, the device B may perform a correlation operation on an STS and an STS included in the first PPDU on a transmission path, to obtain a correlation result, and a horizontal coordinate corresponding to a peak location in the correlation result is arrival time at which the first PPDU on the transmission path arrives at the device B. If the device B determines that arrival time at which the first PPDU on the transmission path 1 arrives at the device B is the earliest, it may be understood that the transmission path 1 is a transmission path on which the transmission time of the first PPDU is the shortest. The device B may determine three delay differences: F1, F2, and F3 respectively. F1 corresponds to the transmission path 1. Because the signal energy of the first PPDU on the transmission path 1 is the largest, F1 is equal to 0. F2 is equal to a time difference between arrival time at which the first PPDU transmitted on the transmission path 2 arrives at the device B and arrival time at which the first PPDU transmitted on the transmission path 1 arrives at the device B. F3 is equal to a time difference between arrival time at which the first PPDU transmitted on the transmission path 3 arrives at the device B and the arrival time at which the first PPDU transmitted on the transmission path 1 arrives at the device B.

4. The angle information includes information about an angle at which the first PPDU arrives at the second device on the at least one transmission path.

In some implementations, the angle information includes at least one angle of arrival, and the at least one angle of arrival corresponds to the at least one transmission path. Each angle of arrival is an angle of arrival at which the first PPDU transmitted on a transmission path corresponding to the angle of arrival arrives at the second device.

Specifically, a plurality of antennas are deployed on the second device, and the second device separately receives, through the plurality of antennas, the first PPDU transmitted on transmission paths. The second device may determine the angle of arrival based on a time difference between receiving time at which the plurality of antennas receive the first PPDU on the transmission paths. The time difference between the receiving time at which the plurality of antennas receive the first PPDU on the transmission paths may be determined based on a phase difference of signals of the first PPDU on the transmission paths that is received by the plurality of antennas.

It should be noted that the foregoing describes the technical solutions of this application by using an example in which the angle information includes the angle of arrival at which the first PPDU on each transmission path arrives at the second device. In actual application, the angle information may alternatively include an angle of arrival that is of each of the plurality of antennas and at which the first PPDU on each transmission path arrives at the second device. This is not specifically limited in this application, namely, the angle of arrival at which the first PPDU on each transmission path arrives at each antenna of the second device.

5. The location information of the second device includes at least one of the following: longitude information of the second device, latitude information of the second device, and altitude information of the second device.

603: The second device sends a second PPDU to the first device, where the second PPDU includes the sensing measurement result. Correspondingly, the first device receives the second PPDU from the second device.

For example, as shown in FIG. 7, after the device B and the device C receive the sensing PPDU of the device A, the device B and the device C separately perform sensing measurement (also referred to as channel impulse response measurement) based on the sensing PPDU, to obtain a CIR result 1 and a CIR result 2. The device B sends CIR feedback 1 to the device A, where the CIR feedback 1 includes the CIR result 1. The device C sends CIR feedback 2 to the device A, where the CIR feedback 2 includes the CIR result 2.

In some implementations, the second PPDU includes a channel measurement feedback element (The Channel Measurement Feedback Element), and the sensing measurement result is carried in the channel measurement feedback element. It should be noted that the channel measurement feedback element may be included in a physical layer payload of the second PPDU.

Optionally, the channel measurement feedback element includes at least one of the following fields: a multipath quantity field, a multipath amplitude field, a multipath delay field, a multipath signal angle of arrival field, and a device location information field.

For example, the transmission path quantity information is carried in the multipath quantity field, the multipath signal component amplitude information is carried in the multipath amplitude field, the time information is carried in the multipath delay field, the multipath signal angle of arrival field is carried in the multipath signal angle of arrival field, and the location information of the second device is carried in the device location information field.

Table 1 shows a specific format of the channel measurement feedback element and a possible example in which the channel measurement feedback element carries the sensing measurement result.

**Table 1**

| Subfield (Subfield) | Size (Size) | Meaning (Meaning) |
| --- | --- | --- |
| Element identifier (Element ID) | 8 bits (bits) | Indicate that a channel measurement feedback element carries a sensing measurement result |

(continued)

| Subfield (Subfield) | Size (Size) | | Meaning (Meaning) |
|---|---|---|---|
| Length (Length) | 8 bits | | Indicate a total length of a multipath quantity field, a multipath amplitude field, a multipath delay field, a multipath signal angle of arrival field, and a device location information field |
| Multipath quantity field | 8 bits | | Indicate a quantity $N_{tap}$ of measured transmission paths |
| Multipath amplitude field (Tap amplitude) | Amplitude of a transmission path 1 (Amplitude of tap 1) | 16 bits | First eight bits indicate a first amplitude difference corresponding to the transmission path 1, and last eight bits indicate a second amplitude difference corresponding to the transmission path 1 |
| | Amplitude of a transmission path 2 (Amplitude of tap 2) | 16 bits | First eight bits indicate a first amplitude difference corresponding to the transmission path 2, and last eight bits indicate a second amplitude difference corresponding to the transmission path 2 |
| | ⋮ | ⋮ | ⋮ |
| | Amplitude of a transmission path $N_{tap}$ (Amplitude of tap $N_{tap}$) | 16 bits | First eight bits indicate a first amplitude difference corresponding to the transmission path $N_{tap}$, and last eight bits indicate a second amplitude difference corresponding to the transmission path $N_{tap}$ |
| Multipath delay field (Tap delay) | Relative delay corresponding to the transmission path 1 (Relative delay of tap 1) | 8 bits | Indicate a delay difference corresponding to the transmission path 1 |
| | Relative delay corresponding to the transmission path 2 (Relative delay of tap 2) | 8 bits | Indicate a delay difference corresponding to the transmission path 2 |
| | ⋮ | ⋮ | ⋮ |
| | Relative delay corresponding to the transmission path $N_{tap}$ (Relative delay of tap $N_{tap}$) | 8 bits | Indicate a delay difference corresponding to the transmission path $N_{tap}$ |
| Multipath signal angle of arrival (angle of arrival, AOA) field | Angle of arrival corresponding to the transmission path 1 (AoA of tap 1) | 8 bits | Indicate the angle of arrival corresponding to the transmission path 1 |
| | Angle of arrival corresponding to the transmission path 2 (AoA of tap 2) | 8 bits | Indicate the angle of arrival corresponding to the transmission path 2 |
| | ⋮ | ⋮ | ⋮ |
| | Angle of arrival corresponding to the transmission path $N_{tap}$ (AoA of tap $N_{tap}$) | 8 bits | Indicate the angle of arrival corresponding to the transmission path $N_{tap}$ |
| Location (Location) information of a second device | 64*3 bits | | Longitude information, latitude information, and altitude information |

Table 1 shows fields included in the channel measurement feedback element, lengths of the fields, and meanings respectively indicated by the fields. It should be noted that bit sizes of the fields shown in Table 1 are merely examples.

This is not specifically limited in this application. For example, an amplitude corresponding to each transmission path in Table 1 may occupy 10 bits, 11 bits, 12 bits, or the like. Bits occupied by a relative delay corresponding to each transmission path in the multipath delay field in Table 1 may be 6 bits, 7 bits, 9 bits, or the like. Bits occupied by an angle of arrival corresponding to each transmission path in the multipath signal angle of arrival field shown in Table 1 may be 6 bits, 7 bits, 9 bits, or the like. In addition, in actual application, different quantities of bits may indicate information included in the sensing measurement result, that is, bit lengths of the fields in the foregoing example may be different. A sequence of the fields included in the channel measurement feedback element is not limited, and Table 1 is merely an example.

Optionally, the channel measurement feedback element includes at least one of the following fields: a multipath quantity field, fields separately corresponding to at least one transmission path, and a device location information field.

Table 2 shows a specific format of the channel measurement feedback element and another possible example in which the channel measurement feedback element carries the sensing measurement result.

**Table 2**

| Subfield (Subfield) | Size (Size) | | Meaning (Meaning) |
|---|---|---|---|
| Element identifier (Element ID) | 8 bits (bits) | | Indicate that a channel measurement feedback element carries a sensing measurement result |
| Length (Length) | 8 bits | | Indicate a total length of subfields of the carried sensing measurement result |
| Multipath quantity field | 8 bits | | Indicate a quantity $N_{tap}$ of measured transmission paths |
| Fields of a transmission path 1 | Amplitude of the transmission path 1 (Amplitude of tap 1) | 16 bits | First eight bits indicate a first amplitude difference corresponding to the transmission path 1, and last eight bits indicate a second amplitude difference corresponding to the transmission path 1 |
| | Relative delay corresponding to the transmission path 1 (Relative delay of tap 1) | 8 bits | Indicate a delay difference corresponding to the transmission path 1 |
| | Angle of arrival corresponding to the transmission path 1 (AoA of tap 1) | 8 bits | Indicate the angle of arrival corresponding to the transmission path 1 |
| Fields of a transmission path 2 | Amplitude of the transmission path 2 (Amplitude of tap 2) | 16 bits | First eight bits indicate a first amplitude difference corresponding to the transmission path 2, and last eight bits indicate a second amplitude difference corresponding to the transmission path 2 |
| | Relative delay corresponding to the transmission path 2 (Relative delay of tap 2) | 8 bits | Indicate a delay difference corresponding to the transmission path 2 |
| | Angle of arrival corresponding to the transmission path 2 (AoA of tap 2) | 8 bits | Indicate the angle of arrival corresponding to the transmission path 2 |
| ⋮ | ⋮ | ⋮ | ⋮ |

(continued)

| Subfield (Subfield) | Size (Size) | | Meaning (Meaning) |
|---|---|---|---|
| Fields of a transmission path $N_{tap}$ | Amplitude of a transmission path $N_{tap}$ (Amplitude of tap $N_{tap}$) | 16 bits | First eight bits indicate a first amplitude difference corresponding to the transmission path $N_{tap}$, and last eight bits indicate a second amplitude difference corresponding to the transmission path $N_{tap}$ |
| | Relative delay corresponding to the transmission path $N_{tap}$ (Relative delay of tap $N_{tap}$) | 8 bits | Indicate a delay difference corresponding to the transmission path $N_{tap}$ |
| | Angle of arrival corresponding to the transmission path $N_{tap}$ (AoA of tap $N_{tap}$) | 8 bits | Indicate the angle of arrival corresponding to the transmission path $N_{tap}$ |
| Location (Location) information of a second device | 64*3 bits | | Longitude information, latitude information, and altitude information |

It can be learned from Table 2 that amplitude information, time information, and angle information corresponding to each transmission path are separately carried in fields corresponding to each transmission path. It should be noted that bit sizes of the fields shown in Table 2 are merely examples. This is not specifically limited in this application. For example, an amplitude corresponding to each transmission path in Table 2 may occupy 10 bits, 12 bits, 14 bits, or the like. Bits occupied by a relative delay corresponding to each transmission path in Table 2 may be 6 bits, 7 bits, 9 bits, or the like. Bits occupied by an angle of arrival corresponding to each transmission path in Table 2 may be 6 bits, 7 bits, 9 bits, or the like. A sequence of the fields included in the channel measurement feedback element is not limited, and Table 2 is merely an example.

Optionally, the embodiment shown in FIG. 6 further includes step 603a, and step 603a may be performed before step 603.

603a: The first device sends a measurement report request to the second device. Correspondingly, the second device receives the measurement report request from the first device.

The measurement report request indicates the second device to feed back the sensing measurement result.

For example, as shown in FIG. 7, after the device B and the device C receive the measurement report request sent by the device A, the device B may send the CIR feedback 1 to the device A, and the device C may send the CIR feedback 2 to the device A.

The following is described: The first device determines, based on the content of the sensing measurement result, information such as a distance between a target in a surrounding environment and the first device and a location and a moving speed of the target in the surrounding environment.

For example, as shown in FIG. 8, the sensing measurement result includes the transmission path quantity information. The device A may preliminarily determine a quantity of targets in the surrounding environment based on the transmission path quantity information. As shown in FIG. 8, the transmission path quantity information indicates the three transmission paths, and the device A may preliminarily determine that there are two targets.

The device A learns of a distance of the transmission path 1 (the line of sight) between the device A and the device B. Specifically, the distance may be obtained by using the ranging process described above. The device A determines, based on the time information, the time difference between the arrival time at which the first PPDU on the transmission path 2 arrives at the device B and the arrival time at which the first PPDU on the transmission path 1 arrives at the device B. In addition, the distance of the line of sight between the device A and the device B is known. Therefore, the device A may determine a distance of the transmission path 2 based on the distance and the time difference. Therefore, the device A may determine that a distance from the target 1 to the device A plus a distance from the target 1 to the device B equals the distance of the transmission path 2. It can be learned from an ellipse characteristic that the target 1 is located on the ellipse shown in FIG. 8, and the device A and the device B are two focuses of the ellipse. The device A may determine, based on the angle information, an angle of arrival at which the first PPDU on the transmission path 2 arrives at the device B. The target 1 is located on the ellipse, and an angle $\theta_1$ between the target 1 and the device B may be approximately equal to the angle of arrival at which the first PPDU on the transmission path 2 arrives at the device B. Therefore, from the device B, an intersection point of the ellipse and a ray in a reverse direction of a direction of the angle of arrival is a location of the target 1. In this case, the device A may determine a distance L between the target 1 and the device B, and the device A may subtract the distance L between the target 1 and the device B from the distance of the transmission path 2, to obtain a distance K between the target 1 and the device A. A location of the device A is known, and the device A may determine, based on the distance K between the target 1 and the device A and the location of the device A, the location of the target 1.

The process shown in FIG. 6 may be performed for a plurality of times. The device A may determine a moving speed of the target 1 based on the multipath signal component amplitude information reported for a plurality of times. Specifically, in a short period of time, an absolute value of an amplitude of a signal of the first PPDU on the transmission path 2 may be considered to be unchanged. However, due to the Doppler effect generated when the target 1 moves, a phase of the signal of the first PPDU on the transmission path 2 changes in measurement for a plurality of adjacent times. The device A may determine a phase change amount of the signal of the first PPDU on the transmission path 2 based on the multipath signal component amplitude information reported for the plurality of times. The device A obtains the Doppler frequency by dividing the phase change amount by measurement time of the measurement for the plurality of times. Then, the device A determines the moving speed of the target 1 based on the Doppler frequency and a wavelength of the signal of the first PPDU transmitted on the transmission path. A process of determining a distance between the target 2 and the device A and a location and a moving speed of the target 2 is also similar.

It can be learned that the technical solutions of this application are applicable to the UWB wireless communication system, and the first device and the second device may be the two UWB devices in the UWB wireless communication system. The second device performs the channel impulse response measurement by using the preamble sequence or the STS in the first PPDU, and feeds back the multipath signal component amplitude information, the time information, the angle information, the transmission path quantity information, and the like that correspond to the at least one transmission path. The second device can perform the sensing measurement on the target (for example, the passive target) in the surrounding environment by using a UWB signal.

In embodiments of this application, the first device sends the first PPDU to the second device, where the first PPDU is used for the sensing measurement; and then the first device receives the second PPDU from the second device, where the second PPDU includes the sensing measurement result, and the sensing measurement result is obtained by the second device by performing the sensing measurement on the first PPDU. It can be learned that, in the technical solutions of this application, the first device receives the second PPDU from the second device, where the second PPDU includes the sensing measurement result, and the sensing measurement result is obtained by the second device by performing the sensing measurement on the first PPDU. In this way, the UWB device can sense the surrounding environment and feed back the corresponding sensing measurement result.

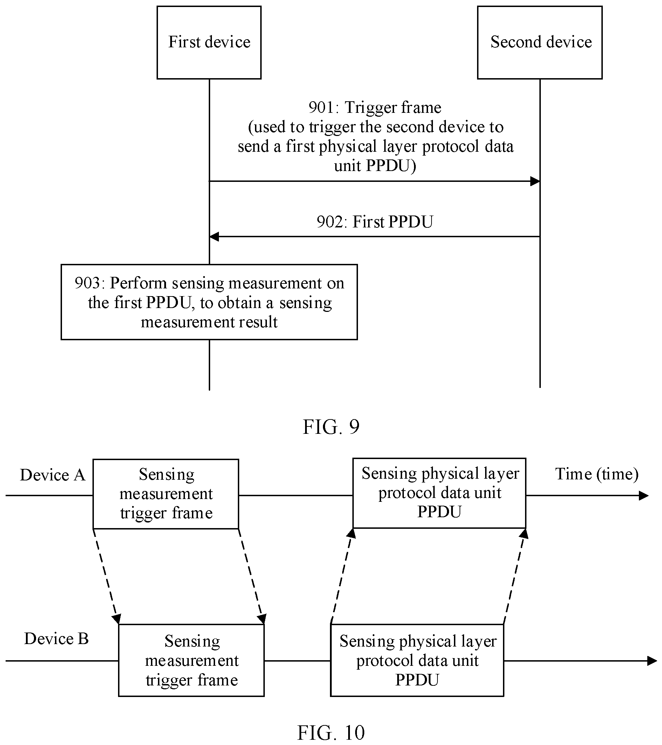

FIG. 9 is a schematic diagram of another embodiment of a sensing measurement method according to an embodiment of this application. Refer to FIG. 9. The sensing measurement method includes:

901: A first device sends a trigger frame to a second device, where the trigger frame is used to trigger the second device to send the first PPDU. Correspondingly, the second device receives the trigger frame from the first device.

The first PPDU is used for sensing measurement. Specifically, the trigger frame may also be referred to as a sensing measurement trigger frame, and the first PPDU may also be referred to as a sensing PPDU.

Optionally, the trigger frame includes first indication information, and the first indication information indicates a format of the first PPDU sent by the second device.

In some implementations, the first indication information includes at least one of the following: an STS key, a signal time length, and a quantity of STS sequence repetitions.

The STS key is used by the second device to generate an STS. The signal time length indicates a length of the STS.

The quantity of STS sequence repetitions indicates a quantity of STS repetitions included in the first PPDU. In other words, the STS is repeatedly placed in the first PPDU, which helps the first device parse the STS. In this way, the second device may determine an STS by using the STS key, and perform a correlation operation on the determined STS and the STS in the first PPDU, to obtain a sensing measurement result. Therefore, security of the sensing measurement is improved.

902: The second device sends the first PPDU to the first device. Correspondingly, the first device receives the first PPDU from the second device.

Specifically, the second device sends the first PPDU in the format of the first PPDU that is indicated by the trigger frame in step 901. For example, the first PPDU includes a preamble sequence and an STS. A length of the STS is a length indicated by the signal time length, and the STS is generated by using the STS key.

For example, as shown in FIG. 10, a device A sends a sensing measurement trigger frame to a device B, to trigger the device B to send a sensing PPDU. The device B sends the sensing PPDU to the device A based on the sensing measurement trigger frame.

The technical solutions of this application are applicable to a UWB wireless communication system, and the first device and the second device may be two UWB devices in the UWB wireless communication system. The first PPDU may also be referred to as the sensing PPDU, and the two UWB devices perform sensing measurement on a surrounding environment by using the sensing PPDU.

903: The first device performs sensing measurement on the first PPDU, to obtain a sensing measurement result.

Specifically, the first device performs the sensing measurement by using the preamble sequence or the STS in the first PPDU, to obtain the sensing measurement result. For example, the first device may perform a correlation operation on a locally determined STS and the STS in the first PPDU to obtain a correlation result, and determine, based on a peak location of the correlation result, arrival time at which the first PPDU arrives at the first device, amplitude information of the first PPDU, and the like.

The sensing measurement result includes at least one of the following: transmission path quantity information, multipath signal component amplitude information, time information, and angle information.

The following describes content included in the sensing measurement result.

1. The transmission path quantity information indicates a quantity of transmission paths between the first device and the second device, namely, a quantity of transmission paths used for communication transmission between the first device and the second device. Specifically, there is at least one transmission path between the first device and the second device, and the at least one transmission path is used for the communication transmission between the first device and the second device. Determining of the transmission path quantity information is similar to step 602 in the embodiment shown in FIG. 6. For details, refer to the foregoing related description.

2. The multipath signal component amplitude information includes signal amplitude information corresponding to the first PPDU on the at least one transmission path.

In some implementations, the multipath signal component amplitude information includes in-phase signal amplitude information and quadrature signal amplitude information. The in-phase signal amplitude information includes amplitude information of an in-phase signal corresponding to the first PPDU on the at least one transmission path. The quadrature signal amplitude information includes an amplitude signal of a quadrature signal corresponding to the first PPDU on the at least one transmission path.

In this implementation, the first device determines amplitude information of an in-phase signal and amplitude information of a quadrature signal of the first PPDU transmitted on each transmission path, and carries the amplitude information of the in-phase signal and the amplitude information of the quadrature signal in the sensing measurement result. In other words, a signal amplitude of the first PPDU transmitted on each transmission path is indicated via the amplitude information of the in-phase signal and the amplitude information of the quadrature signal of the first PPDU transmitted on each transmission path.

Optionally, the in-phase signal amplitude information includes at least one first amplitude difference, and the at least one first amplitude difference corresponds to the at least one transmission path. In other words, the at least one first amplitude difference one-to-one corresponds to the at least one transmission path, and each first amplitude difference corresponds to one transmission path.

Each first amplitude difference is determined based on an amplitude of an in-phase signal of the first PPDU transmitted on a transmission path corresponding to the first amplitude difference and an amplitude of an in-phase signal of the first PPDU transmitted on a first transmission path.

In a possible implementation, the first transmission path is a transmission path that is in the at least one transmission path and on which the first PPDU has strongest signal energy.

For example, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path. For a related description example of the first amplitude difference, refer to the related description in step 602 in the embodiment shown in FIG. 6.

In the foregoing example, the first transmission path is the transmission path that is in the at least one transmission path and on which the first PPDU has the strongest signal energy. In actual application, this is not limited in this application. The first transmission path may be any transmission path in the at least one transmission path. For example, the first transmission path may alternatively be a transmission path that is in the at least one transmission path and on which the first PPDU has moderate signal energy.

Optionally, the quadrature signal amplitude information includes at least one second amplitude difference, and the at least one second amplitude difference corresponds to the at least one transmission path. In other words, the at least second amplitude difference one-to-one corresponds to the at least one transmission path, and each second amplitude difference corresponds to one transmission path.

Each second amplitude difference is determined based on an amplitude of a quadrature signal of the first PPDU transmitted on a transmission path corresponding to the second amplitude difference and an amplitude of a quadrature signal of the first PPDU transmitted on the first transmission path. For the first transmission path, refer to the foregoing related description.

Optionally, each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path. For a related description example of the second amplitude difference, refer to the related description in step 602 in the embodiment shown in FIG. 6.

3. The time information includes time information corresponding to the first PPDU on the at least one transmission path.

In some implementations, the time information includes at least one delay difference, and the at least one delay difference corresponds to the at least one transmission path. In other words, one delay difference corresponds to one transmission path, that is, the at least one delay difference one-to-one corresponds to the at least one transmission path.

Each delay difference is a time difference between arrival time at which the first PPDU transmitted on a transmission path corresponding to the delay difference arrives at the first device and arrival time at which the first PPDU transmitted on a second transmission path arrives at the first device.

In a possible implementation, the second transmission path is a transmission path that is in the at least one transmission path and on which transmission time of the first PPDU is the shortest. In other words, transmission time of the first PPDU on each transmission path may be indicated by a time difference between arrival time at which the first PPDU on different transmission paths arrives at the first device. For a related example description of the delay difference, refer to the related description in step 602 in the embodiment shown in FIG. 6.

4. The angle information includes information about an angle at which the first PPDU arrives at the first device on the at least one transmission path.

In some implementations, the angle information includes at least one angle of arrival, and the at least one angle of arrival corresponds to the at least one transmission path. Each angle of arrival is an angle of arrival at which the first PPDU transmitted on a transmission path corresponding to the angle of arrival arrives at the first device.

Specifically, a plurality of antennas are deployed on the first device, and the first device separately receives, through the plurality of antennas, the first PPDU transmitted on transmission paths. The first device may determine the angle of arrival based on a time difference between receiving time at which the plurality of antennas receive the first PPDU on the transmission paths.

It should be noted that the foregoing describes the technical solutions of this application by using an example in which the angle information includes the angle of arrival at which the first PPDU on each transmission path arrives at the first device. In actual application, the angle information may alternatively include an angle of arrival that is of each of the plurality of antennas and at which the first PPDU on each transmission path arrives at the first device. This is not specifically limited in this application, namely, the angle of arrival at which the first PPDU on each transmission path arrives at each antenna of the first device.

For a process in which the first device determines, based on the content included in the sensing measurement result, information such as a distance between a target in a surrounding environment and the first device and a moving speed of the target, refer to the related descriptions in step 603 in the embodiment shown in FIG. 6. Details are not described herein again.

It can be learned that the technical solutions of this application are applicable to the UWB wireless communication system, and the first device and the second device may be the two UWB devices in the UWB wireless communication system. The embodiment shown in FIG. 9 shows a process in which the first device initiates a sensing measurement trigger procedure, and performs the sensing measurement by using the sensing PPDU sent by the second device. The second device performs channel impulse response measurement by using the preamble sequence or the STS in the first PPDU to obtain the multipath signal component amplitude information, the time information, the angle information, the transmission path quantity information, and the like that correspond to the at least one transmission path between the first device and the second device. The first device can perform the sensing measurement on the target (for example, a passive target) in the surrounding environment by using a UWB signal, and there is no need to feed back the sensing measurement result.

In this embodiment of this application, the first device sends the trigger frame to the second device, where the trigger frame is used to trigger the second device to send the first PPDU, and the first PPDU is used for the sensing measurement. The first device receives the first PPDU from the second device, and the first device performs the sensing measurement on the first PPDU, to obtain the sensing measurement result. In this way, the UWB device can sense a surrounding environment to obtain a corresponding sensing measurement result, and there is no need to feed back the sensing measurement result.

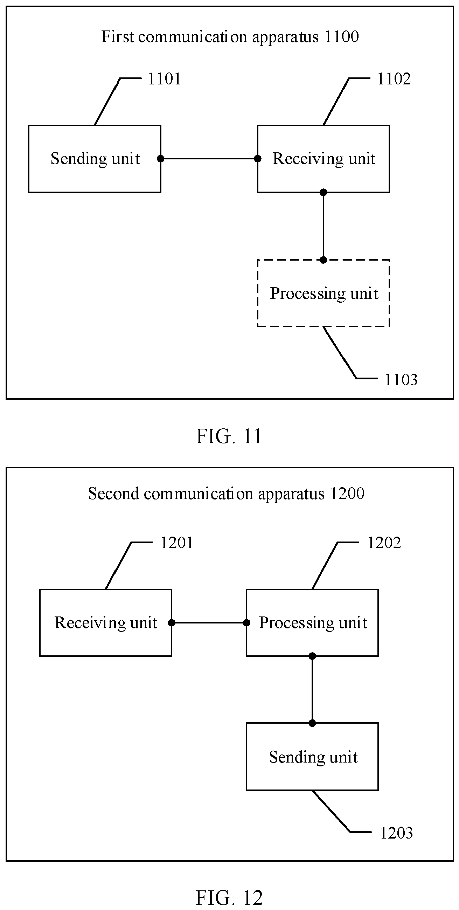

The following describes a first communication apparatus provided in an embodiment of this application. FIG. 11 is a schematic diagram of a structure of a first communication apparatus according to an embodiment of this application. The first communication apparatus 1100 may be configured to perform the steps performed by the first device in the embodiment shown in FIG. 6. For details, refer to the related descriptions in the embodiment shown in FIG. 6.

The first communication apparatus 1100 includes a sending unit 1101 and a receiving unit 1102. Optionally, the first communication apparatus 1100 further includes a processing unit 1103. The sending unit 1101 is configured to perform a sending operation of the first device in the method embodiment shown in FIG. 6, and the receiving unit 1102 is configured to perform a receiving operation of the first device in the method embodiment shown in FIG. 6. The processing unit 1103 is configured to perform a processing operation of the first device in the method embodiment shown in FIG. 6.

Specifically, the first communication apparatus 1100 is configured to perform the following solution:

The sending unit 1101 is configured to send a first PPDU to a second communication apparatus, where the first PPDU is used for sensing measurement; and

the receiving unit 1102 is configured to receive a second PPDU from the second communication apparatus, where the second PPDU includes a sensing measurement result, and the sensing measurement result is obtained by the second communication apparatus by performing sensing measurement on the first PPDU.

In a possible implementation, the sensing measurement result includes: transmission path quantity information, multipath signal component amplitude information, time information, angle information, and location information of the second communication apparatus.

The transmission path quantity information indicates a quantity of transmission paths between the first communication apparatus 1100 and the second communication apparatus, the multipath signal component amplitude information includes signal amplitude information corresponding to the first PPDU on at least one transmission path between the first communication apparatus 1100 and the second communication apparatus, the time information includes time information corresponding to the first PPDU on the at least one transmission path, and the angle information includes information about an angle at which the first PPDU arrives at the second communication apparatus on the at least one transmission path.

In another possible implementation, the multipath signal component amplitude information includes in-phase signal amplitude information and quadrature signal amplitude information, the in-phase amplitude information includes amplitude information of an in-phase signal corresponding to the first PPDU on the at least one transmission path, and the quadrature amplitude information includes amplitude information of a quadrature signal corresponding to the first PPDU on the at least one transmission path.

In another possible implementation, the in-phase signal amplitude information includes at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has strongest signal energy; and the quadrature signal amplitude information includes at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

In another possible implementation, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

In another possible implementation, the time information includes at least one delay difference, the at least one delay difference corresponds to the at least one transmission path, each delay difference is a time difference between arrival time at which the first PPDU transmitted on a transmission path corresponding to the delay difference arrives at the second communication apparatus and arrival time at which the first PPDU transmitted on a second transmission path arrives at the second communication apparatus, and the second transmission path is a transmission path that is in the at least one transmission path and on which transmission time of the first PPDU is the shortest.

In another possible implementation, the angle information includes at least one angle of arrival, the at least one angle of arrival corresponds to the at least one transmission path, and each angle of arrival is an angle of arrival at which the first PPDU transmitted on a transmission path corresponding to the angle of arrival arrives at the second communication apparatus.

In another possible implementation, the location information of the second communication apparatus includes at least one of the following: longitude information of the second communication apparatus, latitude information of the second communication apparatus, or altitude information of the second communication apparatus.

In another possible implementation, the sending unit 1101 is further configured to:

send a sensing measurement request to the second communication apparatus, where the sensing measurement request is used to request the second communication apparatus to assist the first communication apparatus 1100 in performing sensing measurement; and

the receiving unit 1102 is further configured to:

receive a sensing measurement consent response from the second communication apparatus, where the sensing measurement consent response indicates that the second communication apparatus agrees to assist the first communication apparatus 1100 in performing sensing measurement.

In another possible implementation, the sending unit 1101 is further configured to:

send a measurement report request to the second communication apparatus, where the measurement report request is used to request the second communication apparatus to feed back the sensing measurement result.

In another possible implementation, the second PPDU includes a channel measurement feedback element, and the sensing measurement result is carried in the channel measurement feedback element.

In another possible implementation, the channel measurement feedback element includes at least one of the following fields: a multipath quantity field, a multipath amplitude field, a multipath delay field, a multipath signal angle of arrival field, and a device location information field, where the multipath quantity field is used to carry the transmission path quantity information, the multipath amplitude field is used to carry the multipath signal component amplitude information, the multipath delay field is used to carry the time information, the multipath signal angle of arrival field is used to carry the angle information, and the device location information field is used to carry the location information of the second communication apparatus.

The following describes a second communication apparatus provided in embodiments of this application. FIG. 12 is a schematic diagram of a structure of a second communication apparatus according to an embodiment of this application. The second communication apparatus 1200 may be configured to perform the steps performed by the second device in the embodiment shown in FIG. 6. For details, refer to the related descriptions in the embodiment shown in FIG. 6.

The second communication apparatus 1200 includes a receiving unit 1201, a processing unit 1202, and a sending unit 1203. The receiving unit 1202 is configured to perform a receiving operation of the second device in the method embodiment shown in FIG. 6, the processing unit 1202 is configured to perform a processing operation of the second device in the method embodiment shown in FIG. 6, and the sending unit 1203 is configured to perform a sending operation of the second device in the method embodiment shown in FIG. 6.

Specifically, the second communication apparatus 1200 is configured to perform the following solution:

The receiving unit 1201 is configured to receive a first PPDU from a first communication apparatus;

the processing unit 1202 is configured to perform sensing measurement on the first PPDU, to obtain a sensing measurement result; and

the sending unit 1203 is configured to send a second PPDU to the first communication apparatus, where the second PPDU includes the sensing measurement result.

In a possible implementation, the sensing measurement result includes: transmission path quantity information, multipath signal component amplitude information, time information, angle information, and location information of the second communication apparatus 1200.

The transmission path quantity information indicates a quantity of transmission paths between the first communication apparatus and the second communication apparatus 1200, the multipath signal component amplitude information includes signal amplitude information corresponding to the first PPDU on at least one transmission path between the first communication apparatus and the second communication apparatus 1200, the time information includes time information corresponding to the first PPDU on the at least one transmission path, and the angle information includes information about an angle at which the first PPDU arrives at the second communication apparatus 1200 on the at least one transmission path.

In another possible implementation, the multipath signal component amplitude information includes in-phase signal amplitude information and quadrature signal amplitude information, the in-phase amplitude information includes amplitude information of an in-phase signal corresponding to the first PPDU on the at least one transmission path, and the quadrature amplitude information includes amplitude information of a quadrature signal corresponding to the first PPDU on the at least one transmission path.

In another possible implementation, the in-phase signal amplitude information includes at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has strongest signal energy; and the quadrature signal amplitude information includes at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

In another possible implementation, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

In another possible implementation, the time information includes at least one delay difference, the at least one delay difference corresponds to the at least one transmission path, each delay difference is a time difference between arrival time at which the first PPDU transmitted on a transmission path corresponding to the delay difference arrives at the second communication apparatus 1200 and arrival time at which the first PPDU transmitted on a second transmission path arrives at the second communication apparatus 1200, and the second transmission path is a transmission path that is in the at least one transmission path and on which transmission time of the first PPDU is the shortest.

In another possible implementation, the angle information includes at least one angle of arrival, the at least one angle of arrival corresponds to the at least one transmission path, and each angle of arrival is an angle of arrival at which the first PPDU transmitted on a transmission path corresponding to the angle of arrival arrives at the second communication apparatus 1200.

In another possible implementation, the location information of the second communication apparatus 1200 includes at least one of the following: longitude information of the second communication apparatus 1200, latitude information of the second communication apparatus 1200, or altitude information of the second communication apparatus 1200.

In another possible implementation, the receiving unit 1201 is further configured to:

receive a sensing measurement request from the first communication apparatus, where the sensing measurement request is used to request the second communication apparatus 1200 to assist the first communication apparatus in performing sensing measurement; and
the sending unit 1203 is further configured to:
send a sensing measurement consent response to the first communication apparatus, where the sensing measurement consent response indicates that the second communication apparatus 1200 agrees to assist the first communication apparatus in performing sensing measurement.

In another possible implementation, the receiving unit 1201 is further configured to:
receive a measurement report request from the first communication apparatus, where the measurement report request is used to request the second communication apparatus 1200 to feed back the sensing measurement result.

In another possible implementation, the second PPDU includes a channel measurement feedback element, and the sensing measurement result is carried in the channel measurement feedback element.

In another possible implementation, the channel measurement feedback element includes at least one of the following fields: a multipath quantity field, a multipath amplitude field, a multipath delay field, a multipath signal angle of arrival field, and a device location information field, where the multipath quantity field is used to carry the transmission path quantity information, the multipath amplitude field is used to carry the multipath signal component amplitude information, the multipath delay field is used to carry the time information, the multipath signal angle of arrival field is used to carry the angle information, and the device location information field is used to carry the location information of the second communication apparatus 1200.

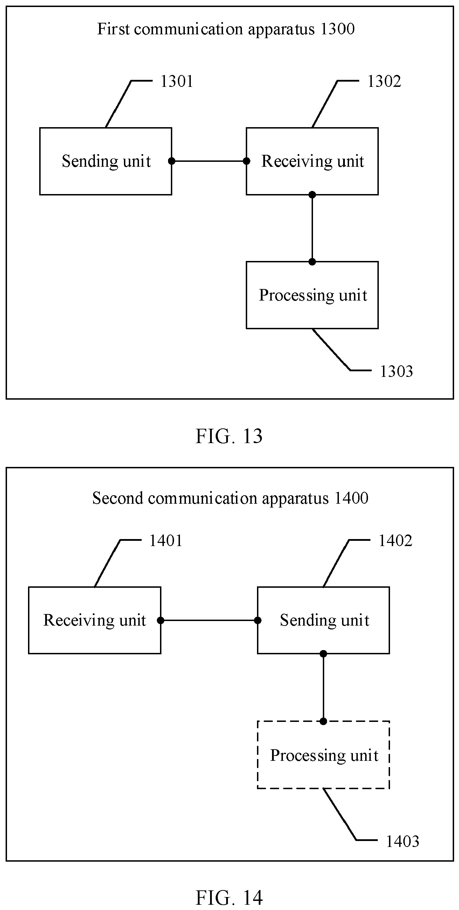

The following describes a first communication apparatus provided in embodiments of this application. FIG. 13 is a schematic diagram of a structure of a first communication apparatus according to an embodiment of this application. The first communication apparatus 1300 may be configured to perform the steps performed by the first device in the embodiment shown in FIG. 9. For details, refer to the related descriptions in the embodiment shown in FIG. 9.

The first communication apparatus 1300 includes a sending unit 1301, a receiving unit 1303, and a processing unit 1303. The sending unit 1301 is configured to perform a sending operation of the first device in the method embodiment shown in FIG. 9, and the receiving unit 1302 is configured to perform a receiving operation of the first device in the method embodiment shown in FIG. 9. The processing unit 1303 is configured to perform a processing operation of the first device in the method embodiment shown in FIG. 9.

Specifically, the first communication apparatus 1300 is configured to perform the following solution:

The sending unit 1301 is configured to send a trigger frame to a second communication apparatus, where the trigger frame is used to trigger the second communication apparatus to send a first PPDU, and the first PPDU is used for sensing measurement;

the receiving unit 1302 is configured to receive a first PPDU from the second communication apparatus; and

the processing unit 1303 is configured to perform sensing measurement on the first PPDU, to obtain a sensing measurement result.

In a possible implementation, the trigger frame includes first indication information, and the first indication information indicates a format of the first PPDU sent by the second communication apparatus.

In another possible implementation, the first indication information includes at least one of the following: an STS key, a signal time length, and a quantity of STS sequence repetitions.

In another possible implementation, the sensing measurement result includes at least one of the following: transmission path quantity information, multipath signal component amplitude information, time information, and angle information.

The transmission path quantity information indicates a quantity of transmission paths between the first communication apparatus 1300 and the second communication apparatus, the multipath signal component amplitude information includes signal amplitude information corresponding to the first PPDU on at least one transmission path between the first communication apparatus 1300 and the second communication apparatus, the time information includes time information corresponding to the first PPDU on the at least one transmission path, and the angle information includes information about an angle at which the first PPDU arrives at the first communication apparatus 1300 on the at least one transmission path.

In another possible implementation, the multipath signal component amplitude information includes in-phase signal amplitude information and quadrature signal amplitude information, the in-phase amplitude information includes amplitude information of an in-phase signal corresponding to the first PPDU on the at least one transmission path, and the quadrature amplitude information includes amplitude information of a quadrature signal corresponding to the first PPDU on the at least one transmission path.

In another possible implementation, the in-phase signal amplitude information includes at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has a strongest signal capability; and the quadrature signal amplitude information includes at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

In another possible implementation, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

In another possible implementation, the time information includes at least one delay difference, the at least one delay difference corresponds to the at least one transmission path, each delay difference is a time difference between arrival time at which the first PPDU transmitted on a transmission path corresponding to the delay difference arrives at the first communication apparatus 1300 and arrival time at which the first PPDU transmitted on a second transmission path arrives at the first communication apparatus 1300, and the second transmission path is a transmission path that is in the at least one transmission path and on which transmission time of the first PPDU is the shortest.

In another possible implementation, the angle information includes at least one angle of arrival, the at least one angle of arrival corresponds to the at least one transmission path, and each angle of arrival is an angle of arrival at which the first PPDU transmitted on a transmission path corresponding to the angle of arrival arrives at the first communication apparatus 1300.

The following describes a second communication apparatus provided in embodiments of this application. FIG. 14 is a schematic diagram of a structure of a second communication apparatus according to an embodiment of this application. The second communication apparatus 1400 may be configured to perform the steps performed by the second device in the embodiment shown in FIG. 9. For details, refer to the related descriptions in the embodiment shown in FIG. 9.

The second communication apparatus 1400 includes a receiving unit 1401 and a sending unit 1402. Optionally, the second communication apparatus 1400 further includes a processing unit 1403. The receiving unit 1401 is configured to perform a receiving operation of the second device in the method embodiment shown in FIG. 9, and the sending unit 1402 is configured to perform a sending operation of the second device in the method embodiment shown in FIG. 9.

Specifically, the second communication apparatus 1400 is configured to perform the following solution:

The receiving unit 1401 is configured to receive a trigger frame from a first communication apparatus, where the trigger frame is used to trigger the first communication apparatus to send a first PPDU, and the first PPDU is used for sensing measurement; and

the sending unit 1402 is configured to send the first PPDU to the first communication apparatus.

In a possible implementation, the trigger frame includes first indication information, and the first indication information indicates a format of the first PPDU sent by the second communication apparatus 1400.

In another possible implementation, the first indication information includes at least one of the following: an STS key, a signal time length, and a quantity of STS sequence repetitions.

In another possible implementation, the sensing measurement result includes at least one of the following: transmission path quantity information, multipath signal component amplitude information, time information, and angle information.

The transmission path quantity information indicates a quantity of transmission paths between the first communication apparatus and the second communication apparatus 1400, the multipath signal component amplitude information includes signal amplitude information corresponding to the first PPDU on at least one transmission path between the first communication apparatus and the second communication apparatus 1400, the time information includes time information corresponding to the first PPDU on the at least one transmission path, and the angle information includes information about an angle at which the first PPDU arrives at the first communication apparatus on the at least one transmission path.

In another possible implementation, the multipath signal component amplitude information includes in-phase signal amplitude information and quadrature signal amplitude information, the in-phase amplitude information includes amplitude information of an in-phase signal corresponding to the first PPDU on the at least one transmission path, and the quadrature amplitude information includes amplitude information of a quadrature signal corresponding to the first PPDU on the at least one transmission path.

In another possible implementation, the in-phase signal amplitude information includes at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has a strongest signal capability; and the quadrature signal amplitude information includes at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

In another possible implementation, each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

In another possible implementation, the time information includes at least one delay difference, the at least one delay difference corresponds to the at least one transmission path, each delay difference is a time difference between arrival time at which the first PPDU transmitted on a transmission path corresponding to the delay difference arrives at the first communication apparatus and arrival time at which the first PPDU transmitted on a second transmission path arrives at the first communication apparatus, and the second transmission path is a transmission path that is in the at least one transmission path and on which transmission time of the first PPDU is the shortest.

In another possible implementation, the angle information includes at least one angle of arrival, the at least one angle of arrival corresponds to the at least one transmission path, and each angle of arrival is an angle of arrival at which the first PPDU transmitted on a transmission path corresponding to the angle of arrival arrives at the first communication apparatus.

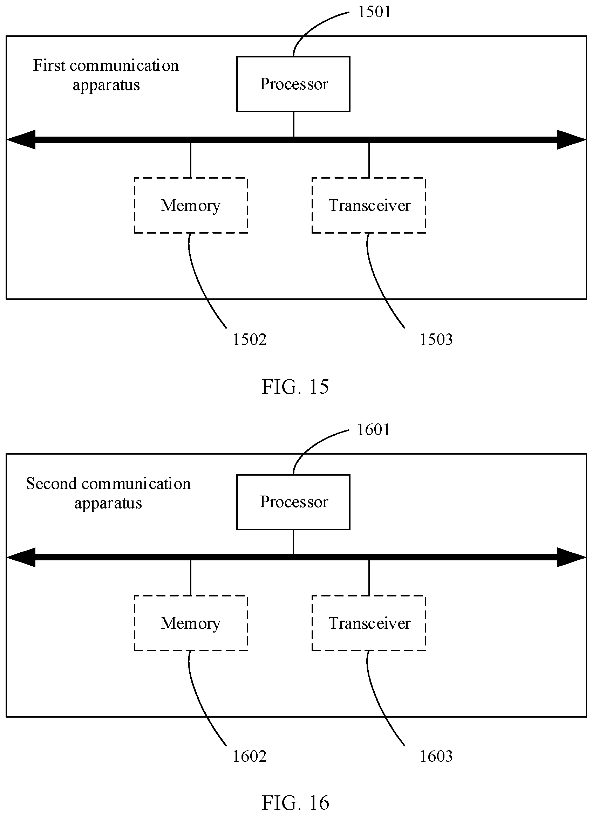

An embodiment of this application further provides a first communication apparatus. FIG. 15 is a schematic diagram of another structure of the first communication apparatus according to this embodiment of this application. The first communication apparatus may be configured to perform the steps performed by the first device in the embodiments shown in FIG. 6 and FIG. 9. For details, refer to the related descriptions in the foregoing method embodiments.

The first communication apparatus includes a processor 1501.

Optionally, the first communication apparatus further includes a memory 1502 and a transceiver 1503. The processor 1501, the memory 1502, and the transceiver 1503 are separately connected through a bus, and the memory stores computer instructions.

Optionally, the sending unit 1101 and the receiving unit 1102 shown in FIG. 11 may be specifically the transceiver 1503. Therefore, specific implementation of the transceiver 1503 is not described again. The processing unit 1103 shown in FIG. 11 may be specifically the processor 1501. Therefore, specific implementation of the processor 1501 is not described again.

Optionally, the sending unit 1301 and the receiving unit 1302 shown in FIG. 13 may be specifically the transceiver 1503. Therefore, specific implementation of the transceiver 1503 is not described again. The processing unit 1303 shown in FIG. 11 may be specifically the processor 1501. Therefore, specific implementation of the processor 1501 is not described again.

An embodiment of this application further provides a second communication apparatus. FIG. 16 is a schematic diagram of another structure of the second communication apparatus according to this embodiment of this application. The second communication apparatus may be configured to perform the steps performed by the second device in the embodiments shown in FIG. 6 and FIG. 9. For details, refer to the related descriptions in the foregoing method embodiments.

The second communication apparatus includes a processor 1601.

Optionally, the second communication apparatus further includes a memory 1602 and a transceiver 1603. The processor 1601, the memory 1602, and the transceiver 1603 are separately connected through a bus, and the memory stores computer instructions.

Optionally, the receiving unit 1201 and the sending unit 1203 shown in FIG. 12 may be specifically the transceiver 1603. Therefore, specific implementation of the transceiver 1603 is not described again. The processing unit 1202 shown in FIG. 12 may be specifically the processor 1601. Therefore, specific implementation of the processor 1601 is not described again.

Optionally, the receiving unit 1401 and the sending unit 1402 shown in FIG. 14 may be specifically the transceiver 1603. Therefore, specific implementation of the transceiver 1603 is not described again. The processing unit 1402 shown in FIG. 14 may be specifically the processor 1601. Therefore, specific implementation of the processor 1601 is not described again.

This application further provides a communication system. The communication system includes a first device and a second device. The first device is configured to perform the steps performed by the first device in the embodiments shown in FIG. 6 and FIG. 9, and the second device is configured to perform the steps performed by the second device in the embodiments shown in FIG. 6 and FIG. 9.

An embodiment of this application provides a computer program product including instructions. When the computer program product runs on a computer, any implementation in the embodiments shown in FIG. 6 and FIG. 9 is performed.

An embodiment of this application provides a computer-readable storage medium, including computer instructions. When the instructions are run on a computer, any implementation in the embodiments shown in FIG. 6 and FIG. 9 is performed.

An embodiment of this application provides a chip apparatus, including a processor, configured to invoke a computer program or computer instructions in a memory, so that any implementation in the embodiments shown in FIG. 6 and FIG. 9 is performed.

Optionally, the chip apparatus further includes a memory, and the memory is configured to store a computer degree, computer instructions, or the like. The chip apparatus may include a chip or may include a chip and another discrete component.

Optionally, the processor is coupled to the memory through an interface.

A person skilled in the art may clearly understand that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

**Claims**

1. A sensing measurement method, wherein the method comprises:

   sending, by a first device, a first physical layer protocol data unit PPDU to a second device, wherein the first PPDU is used for sensing measurement; and
   receiving, by the first device, a second PPDU from the second device, wherein the second PPDU comprises a sensing measurement result, and the sensing measurement result is obtained by the second device by performing sensing measurement on the first PPDU.

2. A sensing measurement method, wherein the method comprises:

   receiving, by a second device, a first physical layer protocol data unit PPDU from a first device;
   performing, by the second device, sensing measurement on the first PPDU, to obtain a sensing measurement result; and
   sending, by the second device, a second PPDU to the first device, wherein the second PPDU comprises the sensing measurement result.

3. The method according to claim 1 or 2, wherein the sensing measurement result comprises at least one of the following: transmission path quantity information, multipath signal component amplitude information, time information, angle information, and location information of the second device; and
   the transmission path quantity information indicates a quantity of transmission paths between the first device and the second device, the multipath signal component amplitude information comprises signal amplitude information corresponding to the first PPDU on at least one transmission path between the first device and the second device, the time information comprises time information corresponding to the first PPDU on the at least one transmission path, and the angle information comprises information about an angle at which the first PPDU arrives at the second device on the at least one transmission path.

4. The method according to claim 3, wherein the multipath signal component amplitude information comprises in-phase signal amplitude information and quadrature signal amplitude information, the in-phase amplitude information comprises amplitude information of an in-phase signal corresponding to the first PPDU on the at least one transmission path, and the quadrature amplitude information comprises amplitude information of a quadrature signal corresponding to the first PPDU on the at least one transmission path.

5. The method according to claim 4, wherein the in-phase signal amplitude information comprises at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has strongest signal energy; and

the quadrature signal amplitude information comprises at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

6. The method according to claim 5, wherein each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and

each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

7. The method according to any one of claims 2 to 6, wherein the time information comprises at least one delay difference, the at least one delay difference corresponds to the at least one transmission path, each delay difference is a time difference between arrival time at which the first PPDU transmitted on a transmission path corresponding to the delay difference arrives at the second device and arrival time at which the first PPDU transmitted on a second transmission path arrives at the second device, and the second transmission path is a transmission path that is in the at least one transmission path and on which transmission time of the first PPDU is the shortest.

8. The method according to any one of claims 2 to 7, wherein the angle information comprises at least one angle of arrival, the at least one angle of arrival corresponds to the at least one transmission path, and each angle of arrival is an angle of arrival at which the first PPDU transmitted on a transmission path corresponding to the angle of arrival arrives at the second device.

9. The method according to any one of claims 2 to 8, wherein the location information of the second device comprises at least one of the following: longitude information of the second device, latitude information of the second device, and altitude information of the second device.

10. The method according to any one of claims 1 and 3 to 9, wherein before the sending, by a first device, a first physical layer protocol data unit PPDU to a second device, the method further comprises:

sending, by the first device, a sensing measurement request to the second device, wherein the sensing measurement request is used to request the second device to assist the first device in performing sensing measurement; and

receiving, by the first device, a sensing measurement consent response from the second device, wherein the sensing measurement consent response indicates that the second device agrees to assist the first device in performing sensing measurement.

11. The method according to claim 10, wherein after the sending, by a first device, a first physical layer protocol data unit PPDU to a second device, and before the receiving, by the first device, a second PPDU from the second device, the method further comprises:

sending, by the first device, a measurement report request to the second device, wherein the measurement report request is used to request the second device to feed back the sensing measurement result.

12. The method according to any one of claims 2 and 3 to 9, wherein before the receiving, by a second device, a first physical layer protocol data unit PPDU from a first device, the method further comprises:

receiving, by the second device, a sensing measurement request from the first device, wherein the sensing measurement request is used to request the second device to assist the first device in performing sensing measurement; and

sending, by the second device, a sensing measurement consent response to the first device, wherein the sensing measurement consent response indicates that the second device agrees to assist the first device in performing sensing measurement.

13. The method according to claim 12, wherein after the receiving, by a second device, a first physical layer protocol data unit PPDU from a first device, and before the sending, by the second device, a second PPDU to the first device, the method further comprises:
receiving, by the second device, a measurement report request from the first device, wherein the measurement report request is used to request the second device to feed back the sensing measurement result.

14. A sensing measurement method, wherein the method comprises:

sending, by a first device, a trigger frame to a second device, wherein the trigger frame is used to trigger the second device to send a first physical layer protocol data unit PPDU, and the first PPDU is used for sensing measurement;
receiving, by the first device, the first PPDU from the second device; and
performing, by the first device, sensing measurement on the first PPDU, to obtain a sensing measurement result.

15. A sensing measurement method, wherein the method comprises:

receiving, by a second device, a trigger frame from a first device, wherein the trigger frame is used to trigger the first device to send a first physical layer protocol data unit PPDU, and the first PPDU is used for sensing measurement; and
sending, by the second device, the first PPDU to the first device.

16. The method according to claim 14 or 15, wherein the trigger frame comprises first indication information, and the first indication information indicates a format of the first PPDU sent by the second device.

17. The method according to claim 16, wherein the first indication information comprises at least one of the following: a scrambled timestamp sequence STS key, a signal time length, or a quantity of STS sequence repetitions.

18. The method according to any one of claims 14 to 17, wherein the sensing measurement result comprises at least one of the following: transmission path quantity information, multipath signal component amplitude information, time information, and angle information; and
the transmission path quantity information indicates a quantity of transmission paths between the first device and the second device, the multipath signal component amplitude information comprises signal amplitude information corresponding to the first PPDU on at least one transmission path between the first device and the second device, the time information comprises time information corresponding to the first PPDU on the at least one transmission path, and the angle information comprises information about an angle at which the first PPDU arrives at the first device on the at least one transmission path.

19. The method according to claim 18, wherein the multipath signal component amplitude information comprises in-phase signal amplitude information and quadrature signal amplitude information, the in-phase amplitude information comprises amplitude information of an in-phase signal corresponding to the first PPDU on the at least one transmission path, and the quadrature amplitude information comprises amplitude information of a quadrature signal corresponding to the first PPDU on the at least one transmission path.

20. The method according to claim 19, wherein the in-phase signal amplitude information comprises at least one first amplitude difference, the at least one first amplitude difference corresponds to the at least one transmission path, each first amplitude difference is determined based on an amplitude of an in-phase signal of the first PPDU transmitted on a transmission path corresponding to the first amplitude difference and an amplitude of an in-phase signal of the first PPDU transmitted on a first transmission path, and the first transmission path is a transmission path that is in the at least one transmission path and on which the first PPDU has a strongest signal capability; and
the quadrature signal amplitude information comprises at least one second amplitude difference, the at least one second amplitude difference corresponds to the at least one transmission path, and each second amplitude difference is determined based on an amplitude of a quadrature signal of the first PPDU transmitted on a transmission path corresponding to the second amplitude difference and an amplitude of a quadrature signal of the first PPDU transmitted on the first transmission path.

21. The method according to claim 20, wherein each first amplitude difference is equal to a logarithm of a first ratio, and the first ratio is a ratio of the amplitude of the in-phase signal of the first PPDU transmitted on the transmission path corresponding to the first amplitude difference to the amplitude of the in-phase signal of the first PPDU transmitted on the first transmission path; and

each second amplitude difference is equal to a logarithm of a second ratio, and the second ratio is a ratio of the amplitude of the quadrature signal of the first PPDU transmitted on the transmission path corresponding to the second amplitude difference to the amplitude of the quadrature signal of the first PPDU transmitted on the first transmission path.

22. The method according to any one of claims 18 to 21, wherein the time information comprises at least one delay difference, the at least one delay difference corresponds to the at least one transmission path, each delay difference is a time difference between arrival time at which the first PPDU transmitted on a transmission path corresponding to the delay difference arrives at the first device and arrival time at which the first PPDU transmitted on a second transmission path arrives at the first device, and the second transmission path is a transmission path that is in the at least one transmission path and on which transmission time of the first PPDU is the shortest.

23. The method according to any one of claims 18 to 22, wherein the angle information comprises at least one angle of arrival, the at least one angle of arrival corresponds to the at least one transmission path, and each angle of arrival is an angle of arrival at which the first PPDU transmitted on a transmission path corresponding to the angle of arrival arrives at the first device.

24. A communication apparatus, wherein the communication apparatus comprises:

a memory, configured to store computer instructions; and
a processor, configured to execute a computer program or the computer instructions stored in the memory, so that the method according to any one of claims 1 to 13 is performed, or the method according to any one of claims 14 to 23 is performed.

25. A communication apparatus, wherein the communication apparatus comprises a processor, and the processor is configured to execute a computer program or computer instructions in a memory, so that the method according to any one of claims 1 to 13 is performed, or the method according to any one of claims 14 to 23 is performed.

26. A communication apparatus, wherein the communication apparatus comprises a processor, and the processor is configured to perform the method according to any one of claims 1 to 13, or the method according to any one of claims 14 to 23.

27. A computer program product comprising program instructions, wherein when the program instructions are run on a computer, the method according to any one of claims 1 to 13 is performed, or the method according to any one of claims 14 to 23 is performed.

28. A computer-readable storage medium, wherein the computer-readable storage medium stores program instructions, and when the program instructions are run, the method according to any one of claims 1 to 13 is performed, or the method according to any one of claims 14 to 23 is performed.

FIG. 1

FIG. 2

EP 4 412 296 A1

| Physical layer protocol data unit PPDU | | | |
|---|---|---|---|

| Synchronization header SHR | | Physical layer header PHR | Physical layer payload PHY Payload |
|---|---|---|---|

| Preamble sequence | Start-of-frame delimiter SFD | Rate and length Rate and Length | Physical layer service data unit PSDU |
|---|---|---|---|

FIG. 3

| Synchronization SYNC | Start-of-frame delimiter SFD | Scrambled timestamp sequence STS | Physical layer header PHR | Physical layer payload PHY Payload |
|---|---|---|---|---|

◄——————— Physical layer protocol data unit PPDU ———————►

FIG. 4(a)

| Synchronization SYNC | Start-of-frame delimiter SFD | Physical layer header PHR | Physical layer payload PHY Payload | Scrambled timestamp sequence STS |
|---|---|---|---|---|

◄——————— Physical layer protocol data unit PPDU ———————►

FIG. 4(b)

| Synchronization SYNC | Start-of-frame delimiter SFD | Scrambled timestamp sequence STS |
|---|---|---|

◄——————— Physical layer protocol data unit PPDU ———————►

FIG. 4(c)

FIG. 5

EP 4 412 296 A1

```
┌─────────────┐                                  ┌──────────────┐
│ First device│                                  │ Second device│
└─────────────┘                                  └──────────────┘
       │          600a: Sensing measurement request      │
       │ - - - - - - - - - - - - - - - - - - - - - - - ->│
       │          600b: Sensing measurement              │
       │                consent response                 │
       │<- - - - - - - - - - - - - - - - - - - - - - - - │
       │          601: First physical layer protocol     │
       │                data unit PPDU                   │
       │ ───────────────────────────────────────────────>│
       │                                                 │
```

602: Perform sensing measurement on the first PPDU, to obtain a sensing measurement result

```
       │          603a: Measurement report request       │
       │ - - - - - - - - - - - - - - - - - - - - - - - ->│
       │          603: Second PPDU                        │
       │     (including the sensing measurement result)   │
       │<─────────────────────────────────────────────── │
       │                                                 │
```

FIG. 6

FIG. 7

EP 4 412 296 A1

Target 1

K

L

$\theta_1$

Device
A

Device
B

Target 2

———————— Transmission path 1

– – – – – – – – Transmission path 2

–··–··–··– Transmission path 3

FIG. 8

First device

Second device

901: Trigger frame
(used to trigger the second device to
send a first physical layer protocol data
unit PPDU)

902: First PPDU

903: Perform sensing measurement on
the first PPDU, to obtain a sensing
measurement result

FIG. 9

Device A

Sensing
measurement
trigger frame

Sensing physical layer
protocol data unit
PPDU

Time (time)

Device B

Sensing
measurement
trigger frame

Sensing physical layer
protocol data unit
PPDU

FIG. 10

First communication apparatus 1100

1101

1102

Sending unit

Receiving unit

Processing unit

1103

FIG. 11

Second communication apparatus 1200

1201

1202

Receiving unit

Processing unit

Sending unit

1203

FIG. 12

First communication apparatus 1300

1301

1302

Sending unit

Receiving unit

Processing unit

1303

FIG. 13

Second communication apparatus 1400

1401

1402

Receiving unit

Sending unit

Processing unit

1403

FIG. 14

1501

First communication
apparatus

Processor

Memory

Transceiver

1502

1503

FIG. 15

1601

Second communication
apparatus

Processor

Memory

Transceiver

1602

1603

FIG. 16

## INTERNATIONAL SEARCH REPORT

| | International application No. |
|---|---|
| | **PCT/CN2022/127611** |

**A. CLASSIFICATION OF SUBJECT MATTER**

H04W 24/10(2009.01)i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNTXT, CNKI, CJFD, WPABS, ENTXT, IEEE, 3GPP: 感测, 感知, 测量, 路径, 位置, 物理层协议数据单元, PPDU, measurement, sensing, path, location

**C. DOCUMENTS CONSIDERED TO BE RELEVANT**

| Category* | Citation of document, with indication, where appropriate, of the relevant passages | Relevant to claim No. |
|---|---|---|
| X | US 2020021466 A1 (INTEL CORP.) 16 January 2020 (2020-01-16) description, paragraphs 0065-0234 | 1-28 |
| A | WO 2018195174 A1 (JIANG FENG et al.) 25 October 2018 (2018-10-25) entire document | 1-28 |
| A | US 2017288838 A1 (CARIOU, L. et al.) 05 October 2017 (2017-10-05) entire document | 1-28 |
| A | US 2019013978 A1 (QUALCOMM INC.) 10 January 2019 (2019-01-10) entire document | 1-28 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 January 2023** | **16 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/127611**

| Patent document cited in search report | | | Publication date (day/month/year) | Patent family member(s) | | | Publication date (day/month/year) |
|---|---|---|---|---|---|---|---|
| US | 2020021466 | A1 | 16 January 2020 | None | | | |
| WO | 2018195174 | A1 | 25 October 2018 | None | | | |
| US | 2017288838 | A1 | 05 October 2017 | None | | | |
| US | 2019013978 | A1 | 10 January 2019 | WO | 2019010003 | A1 | 10 January 2019 |
| | | | | US | 2021203531 | A1 | 01 July 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111277365